# EUROPÄISCHE PATENTSCHRIFT

(11) **EP 3 678 214 B1**
(45) Veröffentlichungstag und Bekanntmachung des Hinweises auf die Patenterteilung: **10.07.2024**
(21) Anmeldenummer: 19150504.9
(22) Anmeldetag: 07.01.2019
(51) Int. Cl.: H01M 10/48, H01M 50/213

(54) **AUFBAU, AKKUPACK UND GARTEN- UND/ODER FORSTBEARBEITUNGSSYSTEM**
STRUCTURE, BATTERY PACK AND GARDENING AND/OR FORESTRY SYSTEM
CONSTRUCTION, BLOC D'ACCUMULATEUR ET SYSTÈME DE TRAVAUX DE JARDINAGE ET / OU FORESTIERS

(43) Veröffentlichungstag der Anmeldung: 08.07.2020
(73) Patentinhaber: Andreas Stihl AG & Co. KG, 71336 Waiblingen (DE)
(72) Erfinder: Ehrler, Denis, 73249 Wernau (DE); von Hofen, Malte, 70197 Stuttgart (DE); Nordmann, Alexander, 70437 Stuttgart (DE); Kolb, Joachim, 71638 Ludwigsburg (DE)
(74) Vertreter: Patentanwälte Ruff, Wilhelm, Beier, Dauster & Partner mbB

(56) Entgegenhaltungen:
- WO-A1-2007/050265
- WO-A1-2016/171783
- US-A1- 2018 364 108

## Beschreibung

### ANWENDUNGSGEBIET UND STAND DER TECHNIK

Die Erfindung bezieht sich auf einen Aufbau für einen Akkupack zur Versorgung eines elektrisch angetriebenen Garten- und/oder Forstbearbeitungsgeräts mit elektrischer Antriebsleistung, auf einen Akkupack aufweisend einen solchen Aufbau und mindestens eine Akkumulatorzelle und auf ein Garten- und/oder Forstbearbeitungssystem aufweisend einen solchen Akkupack und ein elektrisch angetriebenes Garten- und/oder Forstbearbeitungsgerät.

Die US 2018/0364108 A1 offenbart einen Temperatursensor, der einen Sensorhauptkörper mit einer Kontaktfläche zum Kontaktieren mit der Oberfläche einer Batteriezelle, ein Montagemitglied, das den Sensorhauptkörper hält und ihn an der Batteriezelle befestigt, und eine Schraubenfeder umfasst, die zwischen dem Sensorhauptkörper und dem Montagemitglied angeordnet ist. Bei Betrachtung von einer der Kontaktfläche gegenüberliegenden Seite fällt die Mitte P1 der Kontaktfläche mit der Mitte P2 einer Trajektorie zusammen, die einen von der Schraubenfeder gepressten Druckpunkt verbindet. Wenn das Montagemitglied aufgrund einer Neigung eines auf der Oberfläche der Batterie montierten Harzmitglieds geneigt ist, kann der Temperatursensor alle Neigungen durch die Schraubenfeder absorbieren, und verhindern, dass die Kontaktfläche von der Oberfläche der Batteriezelle wegführt.

Die WO 2007/050265 A1 offenbart ein Batteriesystem zum Überwachen einer Temperatur umfassend mindestens eine Zelle mit einer Temperaturerfassungsvorrichtung in der Nähe der mindestens einen Zelle. Das Batteriesystem umfasst auch ein flexibles Mitglied, welches den Temperatursensor in der Nähe der mindestens einen Zelle hält.

### AUFGABE UND LÖSUNG

Der Erfindung liegt als Aufgabe die Bereitstellung eines Aufbaus für einen Akkupack zur Versorgung eines elektrisch angetriebenen Garten- und/oder Forstbearbeitungsgeräts mit elektrischer Antriebsleistung, wobei der Aufbau eine gute, insbesondere einfache, Montage ermöglicht, eines Akkupacks aufweisend einen solchen Aufbau und mindestens eine Akkumulatorzelle und eines Garten- und/oder Forstbearbeitungssystems aufweisend einen solchen Akkupack und ein elektrisch angetriebenes Garten- und/oder Forstbearbeitungsgerät zugrunde.

Die Erfindung löst diese Aufgabe durch die Bereitstellung eines Aufbaus mit den Merkmalen des Anspruchs 1, eines Akkupacks mit den Merkmalen des Anspruchs 12 und eines Garten- und/oder Forstbearbeitungssystems mit den Merkmalen des Anspruchs 14. Vorteilhafte Weiterbildungen der Erfindung sind in den abhängigen Ansprüchen beschrieben.

Der erfindungsgemäße Aufbau ist für einen Akkupack zur Versorgung eines elektrisch angetriebenen Garten- und/oder Forstbearbeitungsgeräts mit elektrischer Antriebsleistung ausgebildet beziehungsweise konfiguriert. Der Aufbau weist mindestens einen Temperatursensor, mindestens einen Anordnungskörper, insbesondere Aufnahmekörper und/oder Vormontagekörper, und, insbesondere mindestens, ein Zellhalterelement auf. Der Temperatursensor weist, insbesondere nur, einen Sensorkopf und, insbesondere nur, eine an den Sensorkopf, insbesondere unmittelbar, anschließende, insbesondere mechanisch und/oder elektrisch verbundene, Anzahl, insbesondere Mehrzahl, von Sensorkabeln auf. Der Sensorkopf weist, insbesondere nur, ein Sensorelement zur, insbesondere automatischen, Messung einer Temperatur, insbesondere eines Werts der Temperatur, von mindestens einer Akkumulatorzelle auf. Der Anordnungskörper definiert beziehungsweise weist, insbesondere nur, einen Kopfanordnungsbereich, insbesondere Kopfaufnahmebereich, zur, insbesondere unmittelbaren und/oder räumlichen, Anordnung, insbesondere Aufnahme, insbesondere nur, des Sensorkopfs auf. Des Weiteren definiert beziehungsweise weist der Anordnungskörper, insbesondere nur, einen an den Kopfanordnungsbereich anschließenden Kabelanordnungsbereich, insbesondere Kabelaufnahmebereich, zur, insbesondere unmittelbaren und/oder räumlichen, Anordnung, insbesondere Aufnahme, insbesondere nur, eines Kabelabschnitts der Anzahl von Sensorkabeln auf. Außerdem weist der Anordnungskörper mindestens ein Kopfsicherungselement mit einem Kabeldurchgang auf. Eine Durchgangsbreite, insbesondere ein Wert der Durchgangsbreite, des Kabeldurchgangs ist größer oder gleich einer Kabelbreite, insbesondere eines Werts der Kabelbreite, des, insbesondere im Kabelanordnungsbereich, angeordneten Kabelabschnitts und kleiner als eine Kopfbreite, insbesondere eines Werts der Kopfbreite, des, insbesondere im Kopfanordnungsbereich, angeordneten Sensorkopfs derart, dass das mindestens eine Kopfsicherungselement zur, insbesondere unmittelbaren, formschlüssigen Sicherung des im Kopfanordnungsbereich angeordneten Sensorkopfs gegen Bewegung in, insbesondere gerader, Richtung des Kabelanordnungsbereichs ausgebildet beziehungsweise konfiguriert ist. Weiter weist der Anordnungskörper mindestens ein Kabelsicherungselement auf. Das mindestens eine Kabelsicherungselement ist zur, insbesondere unmittelbaren, Sicherung des im Kabelanordnungsbereich angeordneten Kabelabschnitts gegen Bewegung zur, insbesondere unmittelbaren, Sicherung des im Kopfanordnungsbereich angeordneten Sensorkopfs gegen Bewegung aus dem Kopfanordnungsbereich, insbesondere heraus, ausgebildet beziehungsweise konfiguriert. Das Zellhalterelement und der Anordnungskörper mit dem, insbesondere angeordneten und gesicherten beziehungsweise vormontierten, Temperatursensor sind zur unmittelbaren mechanischen Verbindung miteinander ausgebildet beziehungsweise konfiguriert.

Dies, insbesondere die Unterteilung des Aufbaus in die oben beschriebenen, insbesondere zeitlich vor einer Montage getrennten, Komponenten, ermöglicht eine einfache Montage des Aufbaus. Zusätzlich oder alternativ ermöglicht dies, insbesondere der Anordnungskörper, dass das Zellhalterelement und der Temperatursensor nicht zur unmittelbaren mechanischen Verbindung miteinander ausgebildet sein können oder brauchen. Weiter zusätzlich oder alternativ ermöglicht der Anordnungskörper eine einfache Anordnung und eine einfache Sicherung des Temperatursensors.

Insbesondere kann der Aufbau eine Mehrzahl von Temperatursensoren und/oder eine, insbesondere gleiche, Mehrzahl von Anordnungskörpern aufweisen.

Zusätzlich oder alternativ kann das Sensorelement ein elektrisches, insbesondere elektronisches Bauelement sein. Zusätzlich oder alternativ kann das Sensorelement dazu ausgebildet sein, ein elektrisches Signal als Maß für die Temperatur zu liefern. Insbesondere kann das Sensorelement ein Thermistor sein, insbesondere ein Heißleiter.

Weiter zusätzlich oder alternativ kann die Durchgangsbreite des Kabeldurchgangs größer oder gleich der Kabelbreite des Kabelabschnitts und kleiner als die Kopfbreite des Sensorkopfs in einer, insbesondere zu der Richtung orthogonalen, Radialrichtung beziehungsweise Umfangsrichtung sein. Zusätzlich oder alternativ kann die Kopfbreite größer als die Kabelbreite sein. Weiter zusätzlich oder alternativ kann der Temperatursensor, insbesondere der Sensorkopf, eine Tropfenform beziehungsweise Perlenform aufweisen.

Weiter zusätzlich oder alternativ können der Anordnungskörper und der Temperatursensor zur Anordnung beziehungsweise Einführung des Sensorkopfs in den Kopfanordnungsbereich, insbesondere hinein, in der Richtung und/oder einer, insbesondere zu der Richtung orthogonalen und/oder anderen, Radialrichtung beziehungsweise Umfangsrichtung ausgebildet sein.

Weiter zusätzlich oder alternativ können der Anordnungskörper und der Temperatursensor zur Anordnung beziehungsweise Einführung des Kabelabschnitts in den Kabelanordnungsbereich, insbesondere hinein, in der Richtung und/oder einer, insbesondere zu der Richtung orthogonalen und/oder anderen, Radialrichtung beziehungsweise Umfangsrichtung ausgebildet sein.

Weiter zusätzlich oder alternativ kann der Kabelanordnungsbereich in der Richtung an den Kopfanordnungsbereich anschließen. Zusätzlich oder alternativ kann der Kopfanordnungsbereich, insbesondere vollständig, an einer Unterseite des Anordnungskörpers, insbesondere des mindestens einen Kopfsicherungselements, sein und/oder der Kabelanordnungsbereich kann, insbesondere mindestens teilweise oder sogar vollständig, in dem Kopfsicherungselement und/oder an einer der Unterseite gegenüberliegenden beziehungsweise abgewandten Oberseite des Anordnungskörpers, insbesondere des mindestens einen Kopfsicherungselements, sein. Weiter zusätzlich oder alternativ kann das mindestens eine Kopfsicherungselement den Kopfanordnungsbereich und/oder den Kabelanordnungsbereich teilweise definieren beziehungsweise aufweisen.

Weiter zusätzlich oder alternativ können das mindestens eine Kopfsicherungselement und der Sensorkopf, insbesondere bei beziehungsweise zeitlich nach Anordnung im Kopfanordnungsbereich, zur, insbesondere unmittelbaren, Berührung miteinander beziehungsweise Anlage aneinander ausgebildet sein.

Weiter zusätzlich oder alternativ kann das mindestens eine Kabelsicherungselement zur Sicherung des Kabelabschnitts gegen Bewegung aus dem Kabelanordnungsbereich, insbesondere heraus, und/oder in und/oder entgegen der Richtung und/oder in und/oder entgegen mindestens einer, insbesondere zu der Richtung orthogonalen, Radialrichtung beziehungsweise Umfangsrichtung ausgebildet sein. Zusätzlich oder alternativ kann das mindestens eine Kabelsicherungselement zur Sicherung des Kabelabschnitts gegen Bewegung zur Sicherung des Sensorkopfs gegen Bewegung entgegen der Richtung und/oder in und/oder entgegen mindestens einer, insbesondere zu der Richtung orthogonalen, Radialrichtung beziehungsweise Umfangsrichtung und/oder von dem mindestens einen Kopfsicherungselement weg ausgebildet sein.

Weiter zusätzlich oder alternativ kann der Anordnungskörper formstabil beziehungsweise starr sein, insbesondere im Vergleich zu dem Kabelabschnitt.

Das Zellhalterelement ist zum, insbesondere unmittelbaren, Halten von mindestens einer Akkumulatorzelle, insbesondere einer, insbesondere länglichen, Rundzelle, an mindestens einer Zellseite, insbesondere einer Zellumfangsseite, ausgebildet beziehungsweise konfiguriert. Insbesondere kann der, insbesondere im Kopfanordnungsbereich angeordnete, Sensorkopf im Bereich der mindestens einen Akkumulatorzelle, insbesondere an einer, insbesondere der, Zellumfangsseite, beim Halten der mindestens einen Akkumulatorzelle, insbesondere räumlich, angeordnet sein. Insbesondere kann der Anordnungskörper zur Messung der Temperatur von der mindestens einen Akkumulatorzelle, insbesondere im Bereich der mindestens einen Akkumulatorzelle, offen sein beziehungsweise eine Öffnung beziehungsweise Aussparung aufweisen.

Weiter zusätzlich oder alternativ können der Temperatursensor, der Anordnungskörper und das Zellhalterelement verschieden sein. Weiter zusätzlich oder alternativ können der Sensorkopf und die Anzahl von Sensorkabeln verschieden sein. Weiter zusätzlich oder alternativ können der Kopfanordnungsbereich und der Kabelanordnungsbereich verschieden sein. Weiter zusätzlich oder alternativ können das mindestens eine Kopfsicherungselement und das mindestens eine Kabelsicherungselement verschieden sein.

Der Kopfanordnungsbereich, der Kabelanordnungsbereich und der Kabeldurchgang sind durchgehend nach außen offen, insbesondere mindestens zeitlich vor mechanischer Verbindung des Zellhalterelements und des Anordnungskörpers. Dies ermöglicht, dass zur Anordnung des Temperatursensors, insbesondere des Sensorkopfs und des Kabelabschnitts, ein Ende/Enden, insbesondere das/die dem Sensorkopf gegenüberliegend beziehungsweise abgewandt sein können, der Anzahl von Sensorkabeln nicht frei sein können oder brauchen. Insbesondere kann der Anordnungskörper, insbesondere das mindestens eine Kopfsicherungselement und/oder das mindestens eine Kabelsicherungselement, einen, insbesondere in der Richtung und/oder einer, insbesondere zu der Richtung orthogonalen und/oder anderen, Radialrichtung beziehungsweise Umfangsrichtung verlaufenden, Schlitz aufweisen.

In einer Weiterbildung der Erfindung weist der Aufbau eine, insbesondere die, Mehrzahl von Temperatursensoren auf. Die Mehrzahl von Sensorkabeln, insbesondere von den Kabelabschnitten verschiedene weitere Kabelabschnitte der Mehrzahl von Sensorkabeln, ist zu mindestens einem Kabelbaum gebündelt, insbesondere mittels mindestens eines Steckverbinders und/oder wobei die weiteren Kabelabschnitte teilweise oder vollständig mindestens ein Flachbandkabel bilden, insbesondere mindestens zeitlich vor Anordnung an den Anordnungskörpern. Dies ermöglicht eine einfache Handhabung der Temperatursensoren. In anderen Worten: Enden, insbesondere die den Sensorköpfen gegenüberliegend beziehungsweise abgewandt sein können, der Mehrzahl von Sensorkabeln, insbesondere von den weiteren Kabelabschnitten, können nicht frei sein. Insbesondere können die Temperatursensoren, insbesondere die Sensorköpfe, gleich, insbesondere typ- und/oder baugleich, sein.

In einer Weiterbildung der Erfindung weist der Anordnungskörper mindestens eine Umfangswandung auf.

Die Umfangswandung erstreckt sich und ist von dem mindestens einen Kopfsicherungselement entgegen der Richtung zur, insbesondere unmittelbaren, formschlüssigen Sicherung des im Kopfanordnungsbereich angeordneten Sensorkopfs gegen radiale Bewegung, insbesondere in und/oder entgegen mindestens einer, insbesondere zu der Richtung orthogonalen, Radialrichtung beziehungsweise Umfangsrichtung, ausgebildet beziehungsweise konfiguriert.

Zusätzlich oder alternativ erstreckt die Umfangswandung sich und ist von dem mindestens einen Kopfsicherungselement in der Richtung zur, insbesondere unmittelbaren, formschlüssigen Sicherung des im Kabelanordnungsbereich angeordneten Kabelabschnitts gegen radiale Bewegung, insbesondere in und/oder entgegen mindestens einer, insbesondere zu der Richtung orthogonalen, Radialrichtung beziehungsweise Umfangsrichtung, ausgebildet beziehungsweise konfiguriert.

Zusätzlich oder alternativ sind das Zellhalterelement und der Anordnungskörper mit dem, insbesondere angeordneten und gesicherten beziehungsweise vormontierten, Temperatursensor zur Einführung des Anordnungskörpers entgegen der Richtung in das Zellhalterelement, insbesondere hinein, ausgebildet beziehungsweise konfiguriert. Die Umfangswandung erstreckt sich und ist von dem mindestens einen Kopfsicherungselement entgegen der Richtung zur, insbesondere unmittelbaren, Begrenzung der Einführung ausgebildet beziehungsweise konfiguriert, insbesondere durch Berührung mit beziehungsweise Anlage an dem Zellhalterelement.

Dies ermöglicht eine zusätzlich Sicherung und/oder eine einfache Montage.

Insbesondere kann die Umfangswandung den Kopfanordnungsbereich und/oder den Kabelanordnungsbereich teilweise definieren beziehungsweise aufweisen. Insbesondere kann die Umfangswandung den im Kopfanordnungsbereich angeordneten Sensorkopf und/oder den im Kabelanordnungsbereich angeordneten Kabelabschnitt mindestens teilweise oder sogar vollständig radial beziehungsweise umfangsseitig umgeben. Zusätzlich oder alternativ kann der Anordnungskörper, insbesondere die Umfangswandung, zur Anordnung des Sensorkopfs im Kopfanordnungsbereich und/oder des Kabelabschnitts im Kabelanordnungsbereich offen sein beziehungsweise eine Öffnung beziehungsweise Aussparung aufweisen. Weiter zusätzlich oder alternativ kann die Umfangswandung eine Zylinderform aufweisen.

In einer Weiterbildung der Erfindung ist das Zellhalterelement zur, insbesondere unmittelbaren, formschlüssigen Sicherung des im Kopfanordnungsbereich angeordneten Sensorkopfs gegen Bewegung aus dem Kopfanordnungsbereich, insbesondere heraus, bei beziehungsweise zeitlich nach mechanischer Verbindung des Zellhalterelements und des Anordnungskörpers mit dem, insbesondere angeordneten und gesicherten beziehungsweise vormontierten, Temperatursensor ausgebildet beziehungsweise konfiguriert. Dies ermöglicht eine zusätzliche Sicherung. Anders formuliert: der Anordnungskörper und der Temperatursensor können oder brauchen nicht zur Anordnung bei beziehungsweise zeitlich nach mechanischer Verbindung des Zellhalterelements und des Anordnungskörpers, insbesondere ohne Temperatursensor, ausgebildet sein. Insbesondere kann das Zellhalterelement zur Sicherung des Sensorkopfs gegen Bewegung entgegen der Richtung und/oder in und/oder entgegen mindestens einer, insbesondere zu der Richtung orthogonalen, Radialrichtung beziehungsweise Umfangsrichtung und/oder von dem mindestens einen Kopfsicherungselement weg bei mechanischer Verbindung des Zellhalterelements und des Anordnungskörpers mit dem Temperatursensor ausgebildet sein. Zusätzlich oder alternativ können das Zellhalterelement und der Anordnungskörper mit dem Temperatursensor zur, insbesondere räumlichen, Anordnung, insbesondere Einführung, des Anordnungskörpers entgegen der Richtung an dem, insbesondere in das, Zellhalterelement, insbesondere hinein, ausgebildet sein.

In einer Weiterbildung der Erfindung weist der Anordnungskörper eine Kabeleinführungsöffnung, insbesondere an einer, insbesondere radialen, Umfangsseite des Anordnungskörpers, zur Einführung des Kabelabschnitts in den Kabelanordnungsbereich und/oder den Kabeldurchgang, insbesondere hinein, auf, insbesondere in der, insbesondere anderen, Radialrichtung. Eine Kabelöffnungsbreite, insbesondere ein Wert der Kabelöffnungsbreite, der Kabeleinführungsöffnung und eine Kabelanordnungstiefe, insbesondere ein Wert der Kabelanordnungstiefe, des Kabelanordnungsbereichs und/oder des Kabeldurchgangs sind derart kleiner als die Kabelbreite, insbesondere eine Wert der Kabelbreite, und größer oder gleich einer Kabeldicke, insbesondere ein Wert der Kabeldicke, des Kabelabschnitts, dass gegenüber der Einführung der Kabelabschnitt, insbesondere rechtwinklig, gedreht, insbesondere im Kabelanordnungsbereich und/oder Kabeldurchgang, angeordnet ist, insbesondere zusammen mit dem Sensorkopf. Dies ermöglicht eine zusätzliche Sicherung des Kabelabschnitts gegen Bewegung. Insbesondere kann die Kabelöffnungsbreite in der, insbesondere einen, Radialrichtung sein. Zusätzlich oder alternativ kann die Kabelanordnungstiefe in der, insbesondere anderen, Radialrichtung sein. Weiter zusätzlich oder alternativ kann die Kabeldicke bei Einführung in der, insbesondere einen, Radialrichtung und/oder bei beziehungsweise zeitlich nach Anordnung in der, insbesondere anderen, Radialrichtung sein. Weiter zusätzlich oder alternativ kann die Kabeldicke zu der Kabelbreite orthogonal und/oder kleiner als die Kabelbreite sein. Weiter zusätzlich oder alternativ kann die Umfangsseite zwischen der Oberseite und der Unterseite sein.

In einer Weiterbildung ist das mindestens eine Kabelsicherungselement zur, insbesondere unmittelbaren, kraftschlüssigen Sicherung, insbesondere zur Klemmung, des Kabelabschnitts ausgebildet beziehungsweise konfiguriert. Dies ermöglicht eine einfache Herstellung des mindestens einen Kabelsicherungselements. Insbesondere kann oder braucht der Anordnungskörper, insbesondere das mindestens eine Kabelsicherungselement, nicht einen Hinterschnitt aufweisen, insbesondere sein.

In einer Weiterbildung der Erfindung ist der Anordnungskörper derart geformt und das mindestens eine Kabelsicherungselement ist an einer, insbesondere der, Oberseite des Anordnungskörpers derart räumlich angeordnet, dass der im Kabelanordnungsbereich angeordnete Kabelabschnitt, insbesondere mindestens rechtwinklig, abgewinkelt durch den Anordnungskörper beziehungsweise mittels des Anordnungskörpers geführt ist. Dies ermöglicht eine zusätzliche Sicherung des Kabelabschnitts gegen Bewegung.

In einer Weiterbildung der Erfindung sind das Zellhalterelement und der Anordnungskörper mit dem Temperatursensor zur, insbesondere unmittelbaren, formschlüssigen Verbindung, insbesondere zur, insbesondere unlösbaren, Schnappverbindung, miteinander ausgebildet beziehungsweise konfiguriert. Dies ermöglicht eine einfache, insbesondere werkzeugfreie, Montage. Insbesondere können/kann das Zellhalterelement und/oder der Anordnungskörper, insbesondere jeweils, elastisch, insbesondere materialelastisch, verformbar sein. Zusätzlich oder alternativ kann unlösbar nicht zerstörungsfrei demontierbar bedeuten.

In einer Weiterbildung der Erfindung ist der Temperatursensor einstückig ausgebildet beziehungsweise konfiguriert.

Zusätzlich oder alternativ ist der Anordnungskörper einstückig ausgebildet beziehungsweise konfiguriert.

Zusätzlich oder alternativ ist das Zellhalterelement einstückig ausgebildet beziehungsweise konfiguriert.

Insbesondere kann oder braucht der Anordnungskörper nicht wärmeleitend ausgebildet sein. Zusätzlich oder alternativ kann oder braucht das Zellhalterelement nicht wärmeleitend ausgebildet sein.

In einer Weiterbildung der Erfindung ist das Zellhalterelement zum, insbesondere unmittelbaren, Halten einer Mehrzahl von Zellgruppen, wobei die Zellgruppen jeweils eine Mehrzahl von, insbesondere den, Akkumulatorzellen, insbesondere von, insbesondere länglichen, Rundzellen, aufweisen, an mindestens einer, insbesondere der, Zellseite, insbesondere einer, insbesondere der, Zellumfangsseite, insbesondere jeweils, ausgebildet beziehungsweise konfiguriert. Das Sensorelement ist zur, insbesondere automatischen, Messung der Temperatur, insbesondere eines Werts der Temperatur, von zwei der Mehrzahl von Zellgruppen bei beziehungsweise zeitlich nach mechanischer Verbindung des Zellhalterelements und des Anordnungskörpers mit dem, insbesondere angeordneten und gesicherten beziehungsweise vormontierten, Temperatursensor, insbesondere räumlich, angeordnet, insbesondere beim Halten der Mehrzahl von Zellgruppen. Dies ermöglicht eine relativ geringe Anzahl, insbesondere Mehrzahl, von Temperatursensoren. Insbesondere können die Zellgruppen, insbesondere jeweils, durch eine elektrische Reihen- und/oder Parallelschaltung ihrer Akkumulatorzellen, insbesondere durch beziehungsweise mittels eines, insbesondere jeweiligen, Zellverbinders, definiert sein.

In einer Weiterbildung der Erfindung ist das Zellhalterelement zur, insbesondere unmittelbaren, Aufnahme der Anzahl von Sensorkabeln, insbesondere einem von dem Kabelabschnitt verschiedenen weiteren Kabelabschnitt der Anzahl von Sensorkabeln, ausgebildet beziehungsweise konfiguriert. Der Aufbau weist mindestens eine Sicherungseinheit, insbesondere einen weiteren Kabelbaum, insbesondere einen Mittelspannungsabgriff-Kabelbaum, auf. Das Zellhalterelement und die Sicherungseinheit sind zur, insbesondere unmittelbaren, mechanischen Verbindung miteinander und zur, insbesondere formschlüssigen, Sicherung der aufgenommenen Anzahl von Sensorkabeln, insbesondere dem weiteren Kabelabschnitt, gegen Bewegung aus dem Zellhalterelement, insbesondere heraus, bei beziehungsweise zeitlich nach mechanischer Verbindung des Zellhalterelements und der Sicherungseinheit ausgebildet beziehungsweise konfiguriert. Dies ermöglicht eine zusätzlich Sicherung. In anderen Worten: das Zellhalterelement und der Anordnungskörper mit dem Temperatursensor können oder brauchen nicht zur mechanischen Verbindung miteinander bei beziehungsweise zeitlich nach mechanischer Verbindung der Sicherungseinheit und des Zellhalterelements, insbesondere ohne Anordnungskörper und ohne Temperatursensor, ausgebildet sein.

Der erfindungsgemäße Akkupack zur Versorgung eines elektrisch angetriebenen Garten- und/oder Forstbearbeitungsgeräts mit elektrischer Antriebsleistung weist einen, insbesondere den, Aufbau wie zuvor beschrieben und mindestens eine Akkumulatorzelle, insbesondere eine, insbesondere längliche, Rundzelle auf, insbesondere eine Mehrzahl von Akkumulatorzellen.

Insbesondere kann der Akkupack eine Masse von maximal 20 Kilogramm (kg), insbesondere von maximal 10 kg, insbesondere von maximal 5 kg, aufweisen. Zusätzlich oder alternativ kann die mindestens eine Akkumulatorzelle ein einzelnes wiederaufladbares Speicherelement für elektrische Energie auf elektrochemischer Basis sein. Weiter zusätzlich oder alternativ kann die mindestens eine Akkumulatorzelle eine Lithium-Ionen-Akkumulatorzelle sein. Weiter zusätzlich können die Akkumulatorzellen, soweit vorhanden, gleich, insbesondere typ- und/oder baugleich, sein. Weiter zusätzlich oder alternativ kann eine Länge der Rundzelle größer als ein Durchmesser der Rundzelle sein.

In einer Weiterbildung der Erfindung weist der Akkupack einen Messelektronikteil auf. Der Messelektronikteil ist zur elektrischen Verbindung mit dem Sensorelement mittels der Anzahl von Sensorkabeln zur, insbesondere automatischen, Messung der Temperatur, insbesondere eines Werts der Temperatur, von der mindestens einen Akkumulatorzelle, insbesondere der Mehrzahl von Akkumulatorzellen, soweit vorhanden, ausgebildet beziehungsweise konfiguriert. Insbesondere kann der Messelektronikteil mindestens einen weiteren Steckverbinder zur elektrischen Verbindung, insbesondere mit dem mindestens einen Steckverbinder, soweit vorhanden, aufweisen. Zusätzlich oder alternativ kann der Messelektronikteil zur, insbesondere automatischen, Abschaltung des Akkupacks, insbesondere der Versorgung mit elektrischer Antriebsleistung des Garten- und/oder Forstbearbeitungsgeräts, bei Überschreitung eines Temperaturobergrenzwerts und/oder bei Unterschreitung eines Temperaturuntergrenzwerts durch die gemessene Temperatur, insbesondere bei einem Problemfall, ausgebildet beziehungsweise konfiguriert sein.

Das erfindungsgemäße Garten- und/oder Forstbearbeitungssystem weist einen, insbesondere den, Akkupack wie zuvor beschrieben und ein elektrisch angetriebenes Garten- und/oder Forstbearbeitungsgerät auf. Der Akkupack und das elektrisch angetriebene Garten- und/oder Forstbearbeitungsgerät sind zur elektrischen Verbindung miteinander zur, insbesondere automatischen, Versorgung des elektrisch angetriebenen Garten- und/oder Forstbearbeitungsgeräts mit elektrischer Antriebsleistung von dem Akkupack ausgebildet beziehungsweise konfiguriert.

Insbesondere kann das Garten- und/oder Forstbearbeitungsgerät einen Elektroantriebsmotor aufweisen. Zusätzlich oder alternativ kann das Garten- und/oder Forstbearbeitungsgerät ein handgeführtes, insbesondere handgetragenes oder bodengeführtes, Garten- und/oder Forstbearbeitungsgerät sein. Insbesondere handgeführtes, insbesondere handgetragenes, Garten- und/oder Forstbearbeitungsgerät kann bedeuten, dass das Garten- und/oder Forstbearbeitungsgerät eine Masse von maximal 50 kg, insbesondere von maximal 20 kg, insbesondere von maximal 10 kg, aufweisen kann. Weiter zusätzlich oder alternativ können der Akkupack und das Garten- und/oder Forstbearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Garten- und/oder Forstbearbeitungsgerät zur, insbesondere werkzeugfrei und/oder zerstörungsfrei, insbesondere lösbaren, mechanischen Verbindung miteinander ausgebildet sein. Insbesondere kann das Garten- und/oder Forstbearbeitungsgerät zum Tragen des Akkupacks ausgebildet sein.

In einer Weiterbildung der Erfindung weist das Garten- und/oder Forstbearbeitungssystem eine Rückentragvorrichtung auf. Die Rückentragvorrichtung ist zum Tragen des Akkupacks ausgebildet beziehungsweise konfiguriert, insbesondere auf einem Rücken eines Benutzers. Insbesondere können die Rückentragvorrichtung und der Akkupack zur, insbesondere werkzeugfrei und/oder zerstörungsfrei, insbesondere lösbaren, mechanischen Verbindung miteinander ausgebildet sein. Zusätzlich oder alternativ kann das Garten- und/oder Forstbearbeitungssystem, insbesondere die Rückentragvorrichtung, ein elektrisches Verbindungskabel zur elektrischen Verbindung des Akkupacks und des Garten- und/oder Forstbearbeitungsgeräts miteinander aufweisen.

In einer Weiterbildung der Erfindung ist das elektrisch angetriebene Garten- und/oder Forstbearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine perspektivische Schnittansicht eines erfindungsgemäßem Aufbaus,
- Fig. 2: eine Perspektivansicht eines Temperatursensors des Aufbaus der Fig. 1,
- Fig. 3: eine Perspektivansicht auf eine Oberseite und eine Umfangsseite eines Anordnungskörpers des Aufbaus der Fig. 1,
- Fig. 4: eine Perspektivansicht auf die Oberseite und die Umfangsseite des Anordnungskörpers der Fig. 3 mit dem Temperatursensor der Fig. 2,
- Fig. 5: eine Perspektivansicht auf eine Unterseite und eine Umfangsseite eines weiteren Anordnungskörpers des Aufbaus der Fig. 1 mit einem weiteren Temperatursensor des Aufbaus der Fig. 1,
- Fig. 6: eine Perspektivansicht auf die Oberseite des Anordnungskörpers der Fig. 3 mit dem Temperatursensor der Fig. 2,
- Fig. 7: eine Perspektivansicht auf eine Unterseite des Anordnungskörpers der Fig. 3 mit dem Temperatursensor der Fig. 2,
- Fig. 8: eine Perspektivansicht einer Mehrzahl von zu mindestens einem Kabelbaum gebündelten Temperatursensoren des Aufbaus der Fig. 1,
- Fig. 9: eine Perspektivansicht einer Mehrzahl von Anordnungskörpern des Aufbaus der Fig. 1 mit der Mehrzahl von Temperatursensoren der Fig. 8,
- Fig. 10: eine Perspektivansicht eines Zellhalterelements des Aufbaus der Fig. 1,
- Fig. 11: eine Perspektivansicht des Zellhalterelements der Fig. 10 bei mechanischer Verbindung mit den Anordnungskörpern mit den Temperatursensoren des Aufbaus der Fig. 1,
- Fig. 12: eine Perspektivansicht eines erfindungsgemäßen Akkupacks aufweisend den Aufbau der Fig. 1 und mindestens eine Akkumulatorzelle,
- Fig. 13: eine Perspektivansicht auf eine Vorderseite des Akkupacks der Fig. 12 aufweisend einen Messelektronikteil,
- Fig. 14: eine Perspektivansicht auf eine Vorderseite des Akkupacks der Fig. 12 aufweisend eine Mehrzahl von Zellverbindern,
- Fig. 15: eine Perspektivansicht auf eine Vorderseite des Akkupacks der Fig. 12 aufweisend mindestens eine Sicherungseinheit,
- Fig. 16: eine Perspektivansicht auf eine Rückseite des Akkupacks der Fig. 12,
- Fig. 17: eine Perspektivansicht des Akkupacks der Fig. 12 aufweisend ein Gehäuse,
- Fig. 18: eine Perspektivansicht eines erfindungsgemäßen Garten- und/oder Forstbearbeitungssystems aufweisend den Akkupack der Fig. 12 und ein elektrisch angetriebenes Garten- und/oder Forstbearbeitungsgerät in Form eines Rasenmähers, und
- Fig. 19: eine weitere Perspektivansicht des Garten- und/oder Forstbearbeitungssystems der Fig. 18 aufweisend ein weiteres elektrisch angetriebenes Garten- und/oder Forstbearbeitungsgerät in Form eines Blasgeräts und eine Rückentragvorrichtung zum Tragen des Akkupacks der Fig. 12.

### DETAILLIERTE BESCHREIBUNG DER AUSFÜHRUNGSBEISPIELE

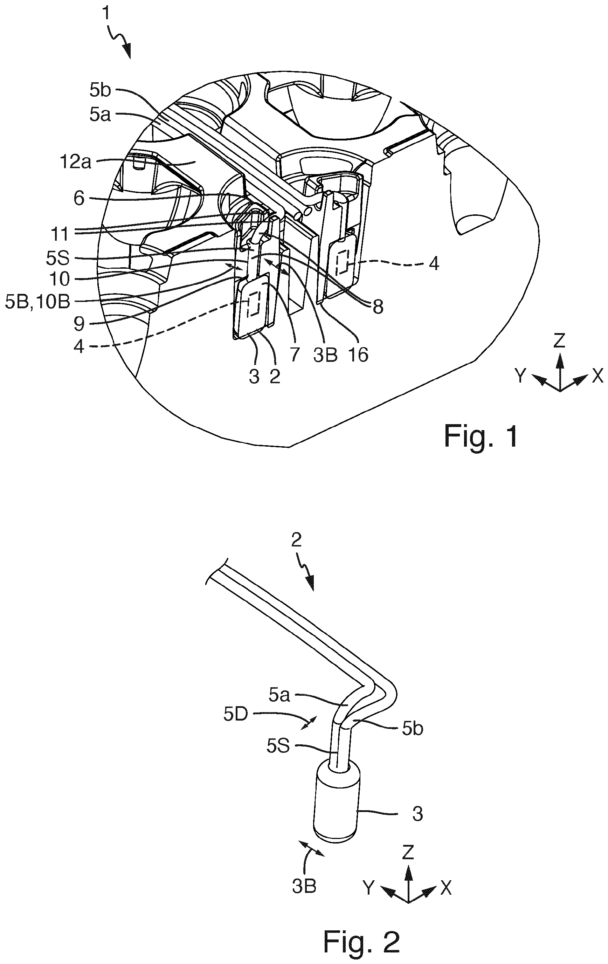

Fig. 1 bis 16 zeigen einen erfindungsgemäßen Aufbau 1 für einen erfindungsgemäßen Akkupack 111 zur Versorgung eines elektrisch angetriebenen Garten- und/oder Forstbearbeitungsgeräts 101 mit elektrischer Antriebsleistung AL. Der Aufbau 1 weist mindestens einen Temperatursensor 2, mindestens einen Anordnungskörper 6 und ein Zellhalterelement 12a auf. Der Temperatursensor 2 weist einen Sensorkopf 3 und eine an den Sensorkopf 3 anschließende Anzahl von Sensorkabeln 5a, 5b auf. Der Sensorkopf 3 weist ein Sensorelement 4 zur Messung einer Temperatur T mindestens einer Akkumulatorzelle 114a, 114b, 114c auf. Der Anordnungskörper 6 definiert einen Kopfanordnungsbereich beziehungsweise Kopfaufnahmeraum 7 zur Anordnung des Sensorkopfs 3. Des Weiteren definiert der Anordnungskörper 6 einen an den Kopfanordnungsbereich 7 anschließenden Kabelanordnungsbereich beziehungsweise Kabelaufnahmeraum 8 zur Anordnung eines Kabelabschnitts 5S der Anzahl von Sensorkabeln 5a, 5b auf. Außerdem weist der Anordnungskörper 6 mindestens ein Kopfsicherungselement 9 mit einem Kabeldurchgang 10 auf. Eine Durchgangsbreite 10B des Kabeldurchgangs 10 ist größer oder gleich, im gezeigten Ausführungsbeispiel gleich, einer Kabelbreite 5B des, insbesondere im Kabelanordnungsbereich 8, angeordneten Kabelabschnitts 5S und kleiner als eine Kopfbreite 3B des, insbesondere im Kopfanordnungsbereich 7, angeordneten Sensorkopfs 3 derart, dass das mindestens eine Kopfsicherungselement 9 zur formschlüssigen Sicherung des im Kopfanordnungsbereich 7 angeordneten Sensorkopfs 3 gegen Bewegung in Richtung z des Kabelanordnungsbereichs 8 ausgebildet ist. Weiter weist der Anordnungskörper 6 mindestens ein Kabelsicherungselement 11 auf. Das mindestens eine Kabelsicherungselement 11 ist zur Sicherung des im Kabelanordnungsbereich 8 angeordneten Kabelabschnitts 5S gegen Bewegung zur Sicherung des im Kopfanordnungsbereich 7 angeordneten Sensorkopfs 3 gegen Bewegung aus dem Kopfanordnungsbereich 7 ausgebildet. Das Zellhalterelement 12a und der Anordnungskörper 6 mit dem Temperatursensor 2 sind zur mechanischen Verbindung miteinander ausgebildet.

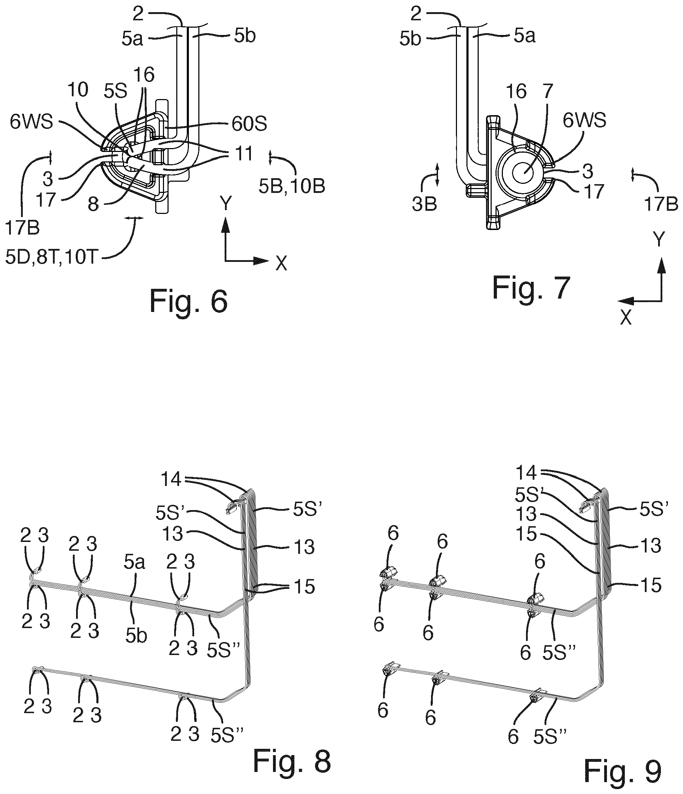

Im Detail weist der Aufbau 1 eine Mehrzahl von Temperatursensoren 2 auf, im gezeigten Ausführungsbeispiel neun, wie in Fig. 8, 9, 13 und 14 gezeigt. In alternativen Ausführungsbeispielen kann der Aufbau nur einen einzigen Temperatursensor oder mindestens zwei, insbesondere mindestens fünf, insbesondere mindestens zehn, Temperatursensoren aufweisen.

Die Mehrzahl von Sensorkabeln 5a, 5b, insbesondere von den Kabelabschnitten 5S verschiedene weitere Kabelabschnitte 5S' der Mehrzahl von Sensorkabeln 5a, 5b, ist zu mindestens einem Kabelbaum 13 gebündelt, insbesondere mittels mindestens eines Steckverbinders 14 und/oder wobei die weiteren Kabelabschnitte 5S' teilweise oder vollständig mindestens ein Flachbandkabel 15 bilden.

Im gezeigten Ausführungsbeispiel ist die Mehrzahl von Sensorkabeln 5a, 5b zu zwei Kabelbäumen 13 gebündelt, insbesondere mittels zwei Steckverbindern 14 und/oder wobei die weiteren Kabelabschnitte 5S' teilweise oder vollständig zwei Flachbandkabel 15 bilden. In alternativen Ausführungsbeispielen kann die Mehrzahl von Sensorkabeln zu nur einem einzigen Kabelbaum, insbesondere mittels nur eines einzigen Steckverbinders und/oder wobei die weiteren Kabelabschnitte teilweise oder vollständig nur ein einziges Flachbandkabel bilden können, oder mindestens drei Kabelbäumen gebündelt sein, insbesondere mittels mindestens drei Steckverbindern und/oder wobei die weiteren Kabelabschnitte teilweise oder vollständig mindestens drei Flachbandkabel bilden können.

Des Weiteren weist im gezeigten Ausführungsbeispiel der Temperatursensor 2 zwei Sensorkabel 5a, 5b auf. In alternativen Ausführungsbeispielen kann der Temperatursensor nur ein einziges Sensorkabel oder mindestens drei Sensorkabel aufweisen.

Außerdem weist im gezeigten Ausführungsbeispiel der Aufbau 1 eine, insbesondere der Mehrzahl von Temperatursensoren 2 gleiche, Mehrzahl von Anordnungskörpern 6 auf.

Weiter weist im gezeigten Ausführungsbeispiel der Anordnungskörper 6 nur ein einziges Kopfsicherungselement 9 auf. In alternativen Ausführungsbeispielen kann der Anordnungskörper mindestens zwei Kopfsicherungselemente aufweisen.

Zudem weist im gezeigten Ausführungsbeispiel der Anordnungskörper 6 zwei Kabelsicherungselemente 11 auf, insbesondere entsprechend der Anzahl von Sensorkabeln 5a, 5b. In alternativen Ausführungsbeispielen kann der Anordnungskörper nur ein einziges Kabelsicherungselement oder mindestens drei Kabelsicherungselemente aufweisen, insbesondere entsprechend der Anzahl von Sensorkabeln.

Des Weiteren weist der Anordnungskörper 6 mindestens eine Umfangswandung 16 auf, wie in Fig. 1, 3 bis 7 und 11 gezeigt.

Die Umfangswandung 16 erstreckt sich und ist von dem mindestens einen Kopfsicherungselement 9 entgegen der Richtung z zur formschlüssigen Sicherung des im Kopfanordnungsbereich 7 angeordneten Sensorkopfs 3 gegen radiale Bewegung, insbesondere in und/oder entgegen mindestens einer, insbesondere zu der Richtung z orthogonalen, Radialrichtung x, y, ausgebildet.

Zusätzlich oder alternativ erstreckt die Umfangswandung 16 sich und ist von dem mindestens einen Kopfsicherungselement 9 in der Richtung z zur formschlüssigen Sicherung des im Kabelanordnungsbereich 8 angeordneten Kabelabschnitts 5S gegen radiale Bewegung, insbesondere in und/oder entgegen der mindestens einen Radialrichtung x, y, ausgebildet.

Zusätzlich oder alternativ sind das Zellhalterelement 12a und der Anordnungskörper 6 mit dem Temperatursensor 2 zur Einführung des Anordnungskörpers 6 entgegen der Richtung z in das Zellhalterelement 12a ausgebildet. Die Umfangswandung 16 erstreckt sich und ist von dem mindestens einen Kopfsicherungselement 9 entgegen der Richtung z zur Begrenzung der Einführung ausgebildet.

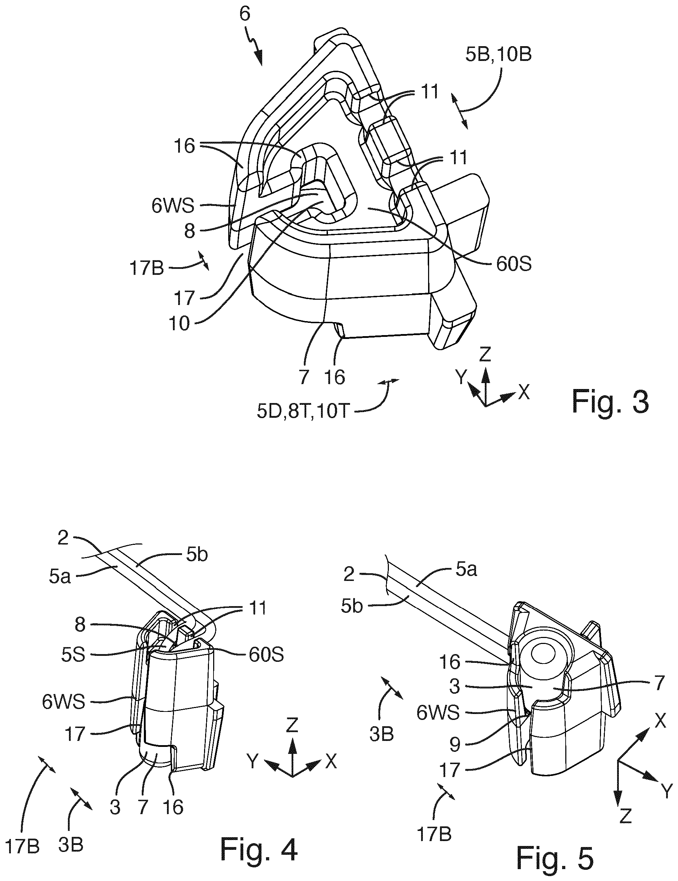

Außerdem weist der Anordnungskörper 6 eine Kabeleinführungsöffnung 17, insbesondere an einer, insbesondere radialen, Umfangsseite 6WS beziehungsweise in der Umfangswandung 16 des Anordnungskörpers 6, zur Einführung des Kabelabschnitts 5S in den Kabelanordnungsbereich 8 und/oder den Kabeldurchgang 10 auf, insbesondere in der Radialrichtung x, wie in Fig. 3 bis 7 gezeigt. Eine Kabelöffnungsbreite 17B der Kabeleinführungsöffnung 17 und eine Kabelanordnungstiefe 8T, 10T des Kabelanordnungsbereichs 8 und/oder des Kabeldurchgangs 10 sind derart kleiner als die Kabelbreite 5B und größer oder gleich einer Kabeldicke 5D des Kabelabschnitts 5S, dass gegenüber der Einführung der Kabelabschnitt 5S, insbesondere rechtwinklig, gedreht, insbesondere im Kabelanordnungsbereich 8 und/oder Kabeldurchgang 10, angeordnet ist, insbesondere zusammen mit dem Sensorkopf 3.

Im gezeigten Ausführungsbeispiel weisen die Kabeleinführungsöffnung 17 und der Kabeldurchgang 10 gemeinsam eine T-Form auf.

Weiter ist der Anordnungskörper 6 derart geformt und das mindestens eine Kabelsicherungselement 11 ist an einer Oberseite 6OS des Anordnungskörpers 6 derart räumlich angeordnet, dass der im Kabelanordnungsbereich 8 angeordnete Kabelabschnitt 5S, insbesondere mindestens rechtwinklig, abgewinkelt durch den Anordnungskörper 6 geführt ist, wie in Fig. 1 bis 9 und 11 bis 14 gezeigt.

Zudem ist das mindestens eine Kabelsicherungselement 11 zur kraftschlüssigen Sicherung, insbesondere zur Klemmung, des Kabelabschnitts 5S ausgebildet, wie in Fig. 1, 3, 4, 6 und 11 bis 14 gezeigt.

Im gezeigten Ausführungsbeispiel weist das mindestens eine Kabelsicherungselement 11 seitliche Rippen auf.

Des Weiteren sind der Kopfanordnungsbereich 7, der Kabelanordnungsbereich 8 und der Kabeldurchgang 10, und insbesondere zusätzlich das mindestens eine Kabelsicherungselement 11 und die Umfangswandung 16, durchgehend nach außen offen, wie in Fig. 3 bis 7 und 9 gezeigt.

Im gezeigten Ausführungsbeispiel weist der Anordnungskörper einen in der Richtung z und in der Radialrichtung x verlaufenden Schlitz auf.

Zur Anordnung des Temperatursensors 2 an dem Anordnungskörper 6 kann wie folgt verfahren werden, wie in Fig. 2 bis 4 gezeigt. Der Temperatursensor 2 wird mit dem Kabelabschnitt 5S durch die Kabeleinführungsöffnung 17, insbesondere hindurch und/oder in der Radialrichtung x, in den Kabelanordnungsbereich 8 und/oder den Kabeldurchgang 10 eingeführt und gedreht, insbesondere zusammen mit dem Sensorkopf 3. Insbesondere zeitlich danach, wird der Sensorkopf 3 in den Kopfanordnungsbereich 7 eingeführt, insbesondere in der Richtung z und/oder durch Ziehen an der Anzahl von Sensorkabeln 5a, 5b, insbesondere an dem Kabelabschnitt 5S, und/oder bis zur Berührung des mindestens einen Kopfsicherungselements 9. Insbesondere zeitlich danach, wird der Kabelabschnitt 5S abgewinkelt, insbesondere in der Radialrichtung x. Insbesondere zeitlich danach, wird der Kabelabschnitt 5S in das mindestens eine Kabelsicherungselement 11, insbesondere hinein, eingeführt, insbesondere entgegen der Richtung z. Somit ist der Kabelabschnitt 5 gesichert, insbesondere positionsgesichert. Somit ist der Sensorkopf 3 gesichert, insbesondere positionsgesichert. Im Detail ist der Sensorkopf 3 gegen Bewegung in der Richtung z durch das mindestens eine Kopfsicherungselement 9, entgegen der Richtung z durch den Kabelabschnitt 5 beziehungsweise das mindestens eine Kabelsicherungselement 11 und in und/oder entgegen der Radialrichtungen x, y durch die Umfangswandung 16 gesichert.

Im gezeigten Ausführungsbeispiel entspricht, insbesondere gleicht, eine Form, insbesondere eine Innenform, des Anordnungskörpers 6 einer Form, insbesondere einer Außenform, des Temperatursensors 2.

Außerdem ist der Temperatursensor 2 einstückig ausgebildet wie in Fig. 2 gezeigt.

Zusätzlich oder alternativ ist der Anordnungskörper 6 einstückig ausgebildet, wie in Fig. 3 gezeigt.

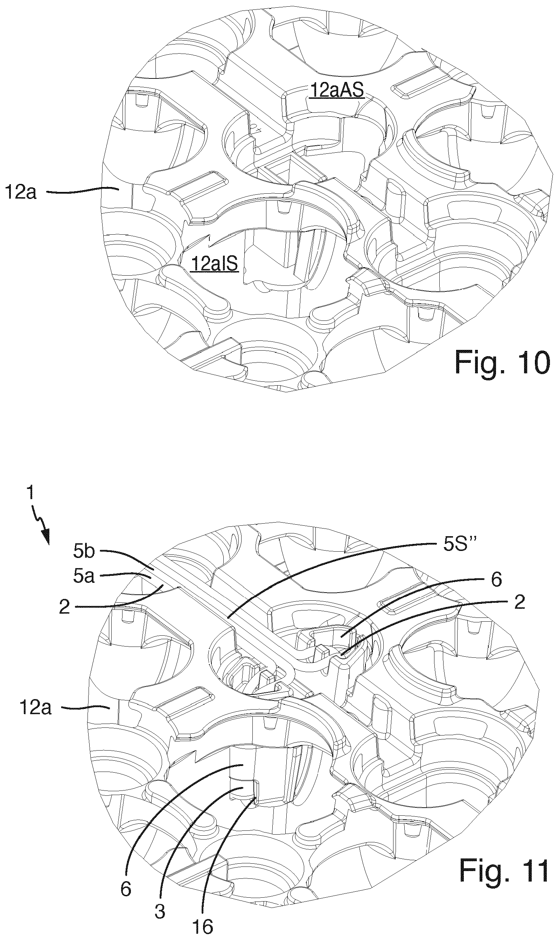

Zusätzlich oder alternativ ist das Zellhalterelement 12a einstückig ausgebildet, wie in Fig. 10 gezeigt.

Weiter sind das Zellhalterelement 12a und der Anordnungskörper 6 mit dem Temperatursensor 2 zur formschlüssigen Verbindung, insbesondere zur, insbesondere unlösbaren, Schnappverbindung, miteinander ausgebildet, wie in Fig. 1 und 10 bis 14 gezeigt.

Zudem ist das Zellhalterelement 12a zur formschlüssigen Sicherung des im Kopfanordnungsbereich 7 angeordneten Sensorkopfs 3 gegen Bewegung aus dem Kopfanordnungsbereich 7 bei mechanischer Verbindung des Zellhalterelements 12a und des Anordnungskörpers 6 mit dem Temperatursensor 2 ausgebildet, wie in Fig. 1 und 11 gezeigt.

Zur mechanischen Verbindung des Zellhalterelements 12 und des Anordnungskörpers 6 mit dem Temperatursensor 2 kann wie folgt verfahren werden, wie in Fig. 1, 10 und 11 gezeigt. Der Anordnungskörper 6 mit dem Temperatursensor 2 wird, insbesondere entgegen der Richtung z, in das Zellhalterelement eingeführt, insbesondere bis zur Berührung der Umfangswandung 16 und des Zellhalterelements 12a miteinander. Somit sind das Zellhalterelement 12a und der Anordnungskörper 6 mit dem Temperatursensor 2 mechanisch miteinander verbunden. Somit ist der Anordnungskörper 6 gesichert. Somit ist der Temperatursensor 2, insbesondere der Sensorkopf 3, gesichert, insbesondere positionsgesichert. Im Detail ist der Sensorkopf 3 gegen Bewegung entgegen der Richtung z durch das Zellhalterelement 12 gesichert.

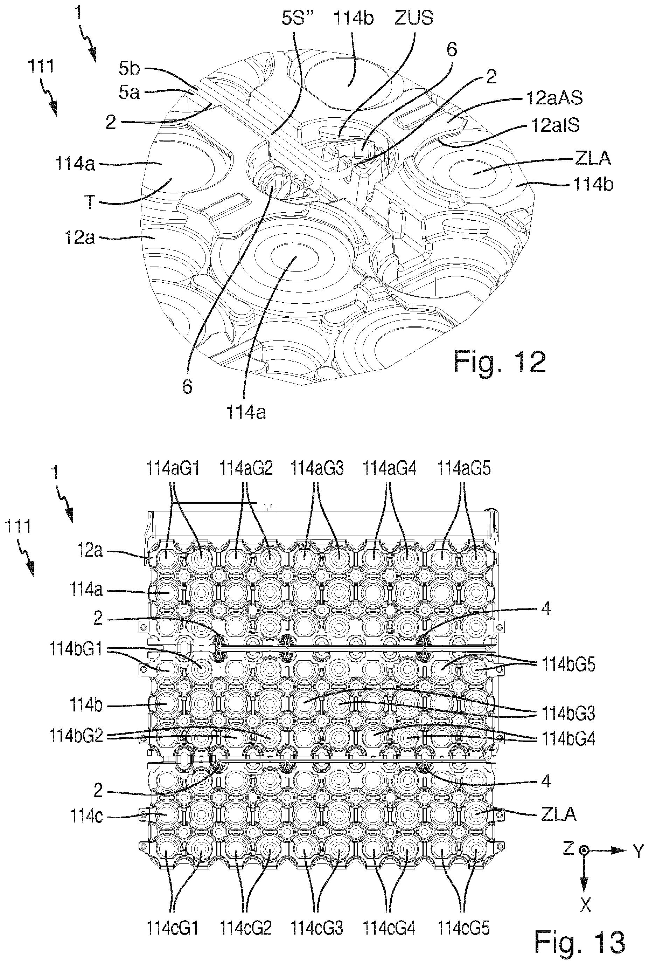

Des Weiteren ist das Zellhalterelement 12a zum Halten einer Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5, wobei die Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 jeweils eine Mehrzahl von Akkumulatorzellen 114a, 114b, 114c, insbesondere von, insbesondere länglichen, Rundzellen, aufweisen, an mindestens einer Zellseite, insbesondere einer Zellumfangsseite ZUS ausgebildet, wie in Fig. 12 gezeigt. In Fig. 12 bis 19 hält das Zellhalterelement 12a die Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 an der Zellseite, insbesondere der Zellumfangsseite ZUS. Das, insbesondere mindestens eine, Sensorelement 4 ist zur Messung der Temperatur T von zwei der Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 bei mechanischer Verbindung des Zellhalterelements 12a und des, insbesondere mindestens einen, Anordnungskörpers 6 mit dem, insbesondere mindestens einen, Temperatursensor 2 angeordnet, insbesondere beim Halten der Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5.

Im gezeigten Ausführungsbeispiel ist das Zellhalterelement 12a zum Halten von fünfzehn Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 ausgebildet. In alternativen Ausführungsbeispielen kann das Zellhalterelement zum Haltern von mindestens zwei, insbesondere mindestens fünf, insbesondere mindestens zehn, insbesondere mindestens zwanzig, Zellgruppen ausgebildet sein.

Außerdem weisen im gezeigten Ausführungsbeispiel die Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 jeweils sechs Akkumulatorzellen 114a, 114b, 114c auf. In alternativen Ausführungsbeispielen können die Zellgruppen mindestens zwei, insbesondere mindestens vier, insbesondere mindestens acht, insbesondere mindestens zehn, Akkumulatorzellen aufweisen.

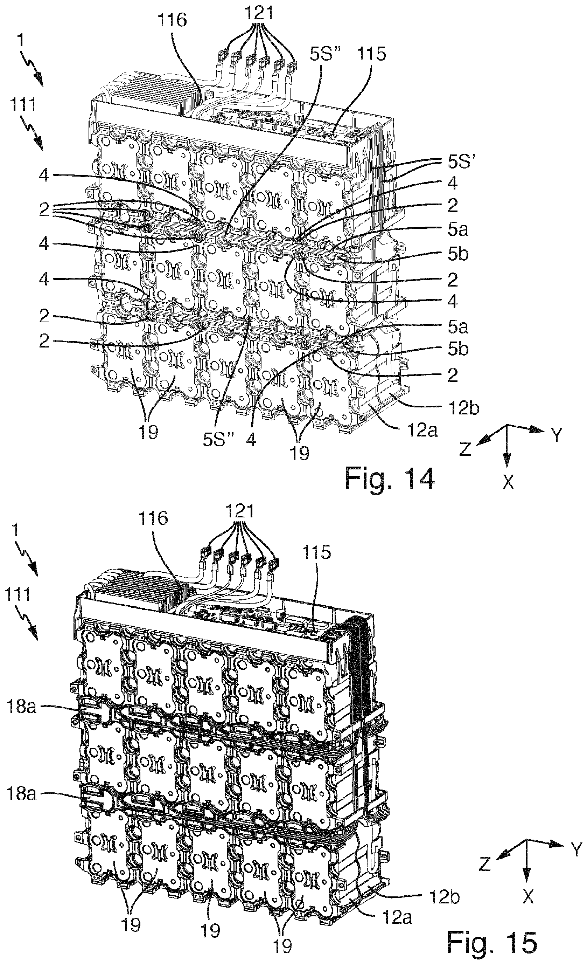

Im Detail sind die Zellgruppen114aG1, 114aG2, 114aG3, 114aG4, 114aG5, 114bG1, 114bG2, 114bG3, 114bG4, 114bG5, 114cG1, 114cG2, 114cG3, 114cG4, 114cG5 durch eine elektrische Reihen- und/oder Parallelschaltung ihrer Akkumulatorzellen 114a, 114b, 114c definiert, insbesondere durch Zellverbinder 19 des Aufbaus 1, wie in Fig. 14 und 15 gezeigt.

Weiter ist in Fig. 13 und 14 das Sensorelement 4 links oben zur Messung der Temperatur T von den Zellgruppen 114aG1, 114aG2 angeordnet. Das Sensorelement 4 mittig oben ist zur Messung der Temperatur T von den Zellgruppen 114aG2, 114aG3 angeordnet. Das Sensorelement 4 rechts oben ist zur Messung der Temperatur T von den Zellgruppen 114aG4, 114aG5 angeordnet. Das Sensorelement 4 links mittig ist zur Messung der Temperatur T von den Zellgruppen 114bG1, 114bG2 angeordnet. Das Sensorelement 4 mittig mittig ist zur Messung der Temperatur T von den Zellgruppen 114bG2, 114bG3 angeordnet. Das Sensorelement 4 rechts mittig ist zur Messung der Temperatur T von den Zellgruppen 114bG4, 114bG5 angeordnet. Das Sensorelement 4 links unten ist zur Messung der Temperatur T von den Zellgruppen 114cG1, 114cG2 angeordnet. Das Sensorelement 4 mittig unten ist zur Messung der Temperatur T von den Zellgruppen 114cG2, 114cG3 angeordnet. Das Sensorelement 4 rechts unten ist zur Messung der Temperatur T von den Zellgruppen 114cG4, 114cG5 angeordnet.

Im gezeigten Ausführungsbeispiel ist ein Teil der Akkumulatorzellen 114a, 114b, 114c in der Richtung y aufeinanderfolgend beziehungsweise nebeneinander, insbesondere räumlich, angeordnet, wie in Fig. 13 gezeigt. Im Detail sind in der Richtung y zehn Akkumulatorzellen 114a, 114b, 114c angeordnet. In alternativen Ausführungsbeispielen können in der Richtung minimal sechs Akkumulatorzellen angeordnet sein. Zudem ist im gezeigten Ausführungsbeispiel ein Teil der Akkumulatorzellen 114a, 114b, 114c in der Richtung x, insbesondere die orthogonal zu der Richtung y ist, aufeinanderfolgend beziehungsweise nebeneinander, insbesondere räumlich, angeordnet. Im Detail sind in der Richtung x neun Akkumulatorzellen 114a, 114b, 114c angeordnet. In alternativen Ausführungsbeispielen können in der Richtung minimal sechs und/oder maximal fünfzehn Akkumulatorzellen angeordnet sein. Des Weiteren sind im gezeigten Ausführungsbeispiel die Akkumulatorzellen 114a, 114b, 114c in Form der Rundzellen jeweils mit einer Rundzellenlängsachse ZLA in Richtung z, insbesondere die orthogonal zu den Richtungen x, y ist, insbesondere räumlich, angeordnet.

Außerdem ist im gezeigten Ausführungsbeispiel ein Teil der Anordnungskörper 6 mit einem Teil der Temperatursensoren 2 in der Richtung y, insbesondere räumlich, angeordnet. Im Detail sind in der Richtung y drei Anordnungskörper 6 mit drei Temperatursensoren 2 angeordnet. In alternativen Ausführungsbeispielen kann in der Richtung mindestens ein Anordnungskörper mit einem Temperatursensor angeordnet sein. Weiter ist im gezeigten Ausführungsbeispiel ein Teil der Anordnungskörper 6 mit einem Teil der Temperatursensoren 2 in der Richtung x, insbesondere die orthogonal zu der Richtung y ist, insbesondere räumlich, angeordnet. Im Detail sind in der Richtung x drei Anordnungskörper 6 mit drei Temperatursensoren 2 angeordnet. In alternativen Ausführungsbeispielen kann in der Richtung mindestens ein Anordnungskörper mit einem Temperatursensor angeordnet sein.

Im Detail ist das Zellhalterelement 12a zur Anordnung, insbesondere Aufnahme, von den Akkumulatorzellen 114a, 114b, 114c in einer Richtung von innen nach außen, insbesondere des Aufbaus 1, auf einer Innenseite 12alS des Zellhalteelements 12a ausgebildet, wie in Fig. 10 bis 16 gezeigt. Zudem ist das Zellhalterelement 12a zur Anordnung, insbesondere zur Einführung, insbesondere des Anordnungskörpers 6 mit dem Temperatursensor 2, im gezeigten Ausführungsbeispiel der Anordnungskörper 6 mit den Temperatursensoren 2, in einer, insbesondere entgegengesetzten, Richtung von außen nach innen auf einer der Innenseite 12alS gegenüberliegenden Außenseite 12aAS des Zellhalterelements 12a ausgebildet.

Des Weiteren weist im gezeigten Ausführungsbeispiel der Aufbau 1 ein weiteres Zellhalterelement 12b auf, wie in Fig. 14 bis 16 gezeigt. In alternativen Ausführungsbeispielen kann der Aufbau nur ein einziges Zellhalterelement oder mindestens drei Zellhalterelemente aufweisen. Im gezeigten Ausführungsbeispiel sind das, insbesondere vorderseitige, Zellhalterelement 12a und das weitere, insbesondere rückseitige, Zellhalterelement 12b zum Halten der Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 an der Zellseite, insbesondere der Zellumfangsseite ZUS, ausgebildet. In Fig. 12 bis 19 halten das Zellhalterelement 12a und das weitere Zellhalterelement 12b die Mehrzahl von Zellgruppen 114aG1, 114aG2, 114aG3, 114aG4, 114aG5, 114bG1, 114bG2, 114bG3, 114bG4, 114bG5, 114cG1, 114cG2, 114cG3, 114cG4, 114cG5 an der Zellseite, insbesondere der Zellumfangsseite ZUS.

Außerdem ist im gezeigten Ausführungsbeispiel der Aufbau 1 quaderförmig. Im Detail weist der Aufbau 1 eine Länge in der Richtung y von 27 Zentimeter (cm) auf. In alternativen Ausführungsbeispielen kann der Aufbau eine Länge in der Richtung von minimal 10 cm und/oder von maximal 50 cm aufweisen. Weiter weist im gezeigten Ausführungsbeispiel der Aufbau 1 eine Breite in der Richtung x von 27 cm auf. In alternativen Ausführungsbeispielen kann der Aufbau eine Breite in der Richtung von minimal 9 cm und/oder von maximal 60 cm aufweisen. Zudem weist im gezeigten Ausführungsbeispiel der Aufbau 1 eine Höhe in der Richtung z von 8 cm auf. In alternativen Ausführungsbeispielen kann der Aufbau eine Höhe in der Richtung von minimal 3 cm und/oder von maximal 20 cm aufweisen.

Des Weiteren verläuft im gezeigten Ausführungsbeispiel die Anzahl, insbesondere die Mehrzahl, von Sensorkabeln 5a, 5b, insbesondere ein von dem Kabelabschnitt 5S verschiedener weiterer Kabelabschnitt 5S" der Anzahl von Sensorkabeln 5a, 5b, insbesondere eine Mehrzahl von weiteren Kabelabschnitten 5S", in der Richtung y, insbesondere zwischen den Zellverbindern 19, wie in Fig. 13 und 14 gezeigt. In alternativen Ausführungsbeispielen kann die Anzahl von Sensorkabeln, insbesondere der weitere Kabelabschnitt, anders verlaufen.

Außerdem ist im gezeigten Ausführungsbeispiel eine Anzahl von Sensorkabeln 5a, 5b, insbesondere ein weiterer Kabelabschnitt 5S`, 5S", länger als eine andere Anzahl von Sensorkabeln 5a, 5b, insbesondere ein weiterer, anderer Kabelabschnitt 5S`, 5S", insbesondere entweder, zur Vermeidung einer falschen Anordnung eines entfernten Temperatursensors 2, insbesondere eines entfernten Sensorelements 4, und eines nahen Temperatursensors 2, insbesondere eines nahen Sensorelements 4, an dem Zellhalterelement 12a ausgebildet, wie in Fig. 8, 9 und 13 bis 15 gezeigt. In alternativen Ausführungsbeispielen können die Sensorkabel gleich lang sein.

Weiter ist im gezeigten Ausführungsbeispiel die Anzahl, insbesondere die Mehrzahl, von Sensorkabeln 5a, 5b an, insbesondere in, dem Zellhalterelement 12a montiert beziehungsweise über das Zellhalterelement 12a verlegt, wie in Fig. 1 und 11 bis 15 gezeigt.

Im Detail ist das Zellhalterelement 12a zur Aufnahme der Anzahl, insbesondere der Mehrzahl, von Sensorkabeln 5a, 5b, insbesondere dem weiteren Kabelabschnitt 5S", insbesondere den weiteren Kabelabschnitten 5S", ausgebildet. Der Aufbau 1 weist mindestens eine Sicherungseinheit 18a, insbesondere einen weiteren Kabelbaum, insbesondere einen Mittelspannungsabgriff-Kabelbaum, auf, wie in Fig. 15 gezeigt. Das Zellhalterelement 12a und die Sicherungseinheit 18a sind zur mechanischen Verbindung miteinander und zur, insbesondere formschlüssigen, Sicherung der aufgenommenen Anzahl von Sensorkabeln 5a, 5b, insbesondere dem weiteren Kabelabschnitt 5S", gegen Bewegung aus dem Zellhalterelement 12a bei mechanischer Verbindung des Zellhalterelements 12a und der Sicherungseinheit 18a ausgebildet. In Fig. 15 sind das Zellhalterelement 12a und die Sicherungseinheit 18a mechanisch miteinander verbunden und sichern die aufgenommene Anzahl von Sensorkabeln 5a, 5b, insbesondere den weiteren Kabelabschnitt 5S", gegen Bewegung aus dem Zellhalterelement 12a.

Im gezeigten Ausführungsbeispiel weist der Aufbau zwei Sicherungseinheiten 18a auf. In alternativen Ausführungsbeispielen kann der Aufbau nur eine einzige Sicherungseinheit oder mindestens drei Sicherungseinheiten aufweisen.

Im Detail weist das Zellhalterelement 12a mindestens eine Kabelrinne 15, im gezeigten Ausführungsbeispiel zwei Kabelrinnen 15, zur Aufnahme der Anzahl von Sensorkabeln 5a, 5b, insbesondere dem weiteren Kabelabschnitt 5S", auf.

Fig. 12 bis 19 zeigen einen erfindungsgemäßen Akkupack 111 zur Versorgung des elektrisch angetriebenen Garten- und/oder Forstbearbeitungsgeräts 101 mit elektrischer Antriebsleistung AL. Der Akkupack 111 weist den Aufbau 1 und die mindestens eine Akkumulatorzelle 114a, 114b, 114c, im gezeigten Ausführungsbeispiel die Mehrzahl von Akkumulatorzellen 114a, 114b, 114c, auf.

Des Weiteren weist der Akkupack 111 einen Messelektronikteil 115 auf, wie in Fig. 13 bis 16 gezeigt. Der Messelektronikteil 115 ist zur elektrischen Verbindung mit dem, insbesondere mindestens einen, Sensorelement 4 mittels der Anzahl, insbesondere der Mehrzahl, von Sensorkabeln 5a, 5b zur Messung der Temperatur T von der mindestens einen Akkumulatorzelle 114a, 114b, 114c, im gezeigten Ausführungsbeispiel der Mehrzahl von Akkumulatorzellen 114a, 114b, 114c, ausgebildet. In Fig. 13 bis 19 ist der Messelektronikteil 115 mit dem Sensorelement 4 mittels der Anzahl von Sensorkabeln 5a, 5b elektrisch verbunden.

Im gezeigten Ausführungsbeispiel weist der Messelektronikteil 115 mindestens einen weiteren Steckverbinder zur elektrischen Verbindung, insbesondere mit dem mindestens einen Steckverbinder 14, auf.

Außerdem ist im gezeigten Ausführungsbeispiel der, insbesondere mindestens eine, Sensorkopf 3, insbesondere das, insbesondere mindestens eine, Sensorelement 4, mit der mindestens einen Akkumulatorzelle 114a, 114b, 114c, im gezeigten Ausführungsbeispiel der Mehrzahl von Akkumulatorzellen 114a, 114b, 114c, mittels eines Wärmeleitklebers thermisch verbunden und vergossen, insbesondere bei beziehungsweise zeitlich nach Anordnung an dem Anordnungskörper 6, insbesondere Kopfanordnungsbereich 7, und mechanischer Verbindung mit dem Zellhalterelement 12a.

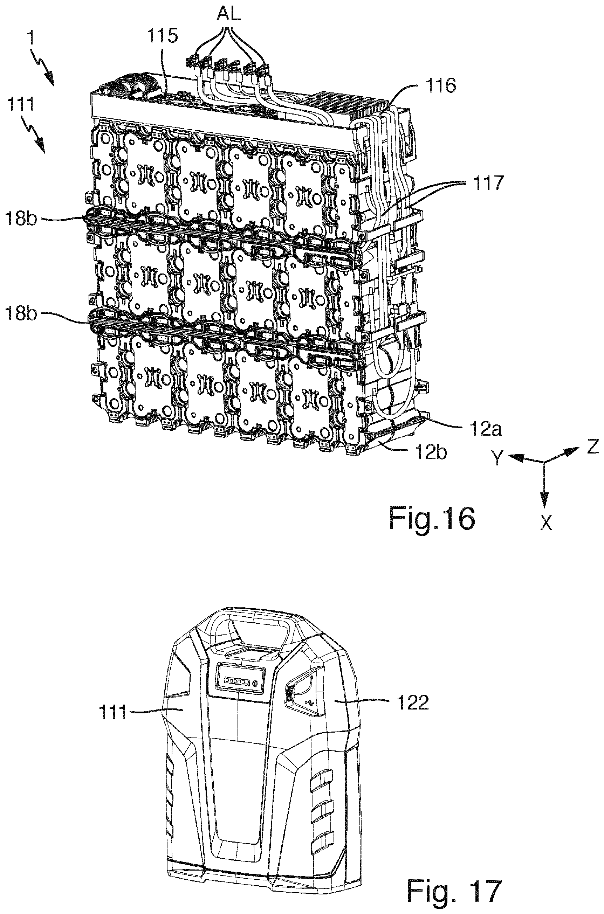

Zusätzlich ist im gezeigten Ausführungsbeispiel der Messelektronikteil 115 zur elektrischen Verbindung mit den Akkumulatorzellen 114a, 114b, 114c mittels der Zellverbinder 19 und der mindestens einen Sicherungseinheit 18a, insbesondere Kabelbaum, insbesondere Mittelspannungsabgriff-Kabelbaum, zur, insbesondere automatischen, Messung von Spannungen, insbesondere von Mittelspannungen, insbesondere Spannungswerten, von den Akkumulatorzellen 114a, 114b, 114c ausgebildet. In Fig. 15 und 16 ist der Messelektronikteil 115 mit den Akkumulatorzellen 114a, 114b, 114c mittels der Zellverbinder 19 und der mindestens einen Sicherungseinheit 18a, insbesondere Kabelbaum, insbesondere Mittelspannungsabgriff-Kabelbaum, elektrisch verbunden.

Im gezeigten Ausführungsbeispiel ist ein Maximalpotential MXP, insbesondere des Akkupacks 111, minimal 10 Volt (V), und/oder maximal 500 V, insbesondere 42 V.

Zusätzlich oder alternativ ist eine maximale elektrische Antriebsleistung MAL, insbesondere des Akkupacks 111, minimal 50 Watt (W) und/oder maximal 5 Kilowatt (kW).

Zusätzlich oder alternativ ist ein maximaler Energieinhalt MEI, insbesondere des Akkupacks 111, minimal 80 Wattstunden (Wh) und/oder maximal 5 Kilowattstunden (kWh), insbesondere 1,5 kWh.

Weiter weist im gezeigten Ausführungsbeispiel der Akkupack 111 einen Leistungselektronikteil 116 auf, wie in Fig. 14 bis 16 gezeigt. Der Leistungselektronikteil 116 ist zur elektrischen Verbindung mit den Akkumulatorzellen 114a, 114b, 114c mittels, insbesondere von der Anzahl von Sensorkabeln 5a, 5b und/oder der mindestens einen Sicherungseinheit 18, insbesondere Kabelbaum, insbesondere Mittelspannungsabgriff-Kabelbaum, verschiedenen, Leistungsleitungen 117 und der Zellverbinder 19 ausgebildet. In Fig. 16 ist der Leistungselektronikteil 116 mit den Akkumulatorzellen 114a, 114b, 114c mittels der Leistungsleitungen 117 und der Zellverbinder 19 elektrisch verbunden.

Im gezeigten Ausführungsbeispiel sind die Leistungsleitungen 117 an, insbesondere in, dem mindestens einen Zellhalterelement 12a, 12b montiert beziehungsweise über das mindestens eine Zellhalterelement 12a, 12b verlegt, wie in Fig. 16 gezeigt.

Zudem weist im gezeigten Ausführungsbeispiel der Akkupack 111 Steckverbinder 121 auf, insbesondere zur elektrischen Verbindung des Akkupacks 111 mit dem Garten- und/oder Forstbearbeitungsgerät 101, wie in Fig. 14 bis 16 gezeigt.

Des Weiteren weist im gezeigten Ausführungsbeispiel der Akkupack 111 ein gemeinsames Gehäuse 122, insbesondere Schutzgehäuse, auf, wie in Fig. 17 bis 19 gezeigt. Der Aufbau 1 und die Akkumulatorzellen 114a, 114c, 114c sind in dem gemeinsamen Gehäuse 122, insbesondere räumlich, angeordnet. Außerdem sind in dem gemeinsamen Gehäuse 122 der Messelektronikteil 115, der Leistungselektronikteil 116, die Leistungsleitungen 117 und die Steckverbinder 121, insbesondere räumlich, angeordnet.

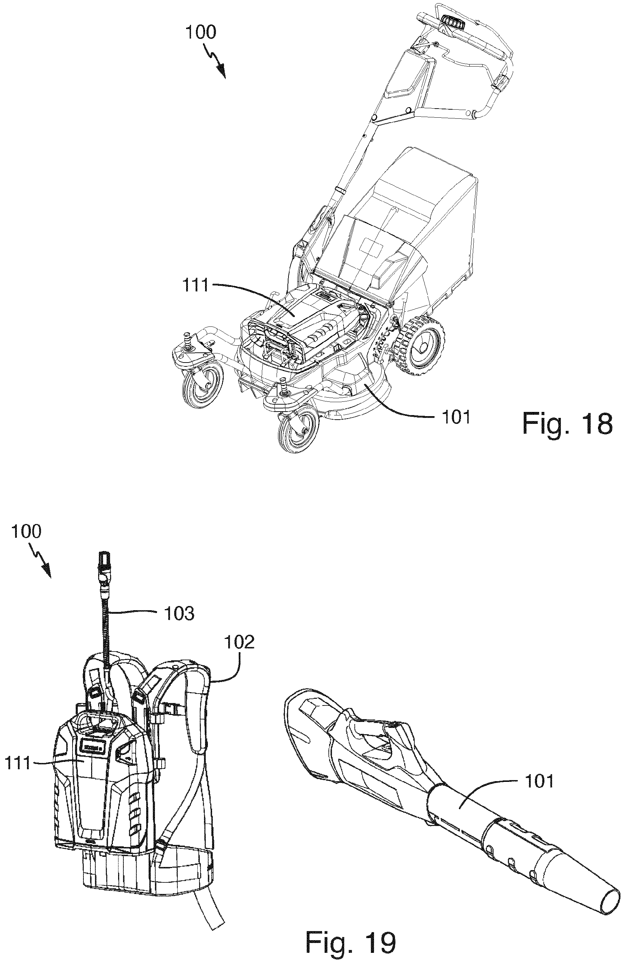

Fig. 18 und 19 zeigen ein erfindungsgemäßes Garten- und/oder Forstbearbeitungssystem 100. Das Garten- und/oder Forstbearbeitungssystem 100 weist den Akkupack 111 und das elektrisch angetriebene Garten- und/oder Forstbearbeitungsgerät 101 auf. Der Akkupack 111 und das elektrisch angetriebene Garten- und/oder Forstbearbeitungsgerät 101 sind zur elektrischen Verbindung miteinander zur Versorgung des elektrisch angetriebenen Garten- und/oder Forstbearbeitungsgeräts 101 mit elektrischer Antriebsleistung AL von dem Akkupack 111 ausgebildet.

Im gezeigten Ausführungsbeispiel weist das Garten- und/oder Forstbearbeitungssystem 100 zwei Garten- und/oder Forstbearbeitungsgeräte 101 auf. In alternativen Ausführungsbeispielen kann das Garten- und/oder Forstbearbeitungssystem nur ein einziges Garten- und/oder Forstbearbeitungsgerät oder mindestens drei Garten- und/oder Forstbearbeitungsgeräte aufweisen.

In Fig. 18 ist das Garten- und/oder Forstbearbeitungsgerät 101 ein Rasenmäher. In Fig. 19 ist das Garten- und/oder Forstbearbeitungsgerät 101 ein Blasgerät. In alternativen Ausführungsbeispielen kann das Garten- und/oder Forstbearbeitungsgerät eine Säge, ein Hoch-Entaster, ein Freischneider, eine Heckenschere, ein Heckenschneider, ein Laubbläser, eine Astschere, ein Trennschleifer, ein Kehrgerät, eine Kehrwalze, eine Kehrbürste, ein Vertikutierer oder eine Grasschere sein.

Der Rasenmäher 101 ist zum Tragen des Akkupacks 111 ausgebildet.

Des Weiteren weist das Garten- und/oder Forstbearbeitungssystem 100 eine Rückentragvorrichtung 102 auf. Die Rückentragvorrichtung 102 ist zum Tragen des Akkupacks 111 ausgebildet.

Zusätzlich weist das Garten- und/oder Forstbearbeitungssystem 100, insbesondere die Rückentragvorrichtung 102, ein elektrisches Verbindungskabel 103 zur elektrischen Verbindung des Akkupacks 111 und des Garten- und/oder Forstbearbeitungsgeräts 101, in Fig. 19 des Blasgeräts, miteinander auf.

Wie die gezeigten und oben erläuterten Ausführungsbeispiele deutlich machen, stellt die Erfindung einen Aufbau für einen Akkupack zur Versorgung eines elektrisch angetriebenen Garten- und/oder Forstbearbeitungsgeräts mit elektrischer Antriebsleistung, wobei der Aufbau eine gute, insbesondere einfache, Montage ermöglicht, einen Akkupack aufweisend einen solchen Aufbau und mindestens eine Akkumulatorzelle und ein Garten- und/oder Forstbearbeitungssystem aufweisend einen solchen Akkupack und ein elektrisch angetriebenes Garten- und/oder Forstbearbeitungsgerät bereit.

## Patentansprüche

1. Aufbau (1) für einen Akkupack (111) zur Versorgung eines elektrisch angetriebenen Garten- und/oder Forstbearbeitungsgeräts (101) mit elektrischer Antriebsleistung (AL), wobei der Aufbau (1) aufweist:
- mindestens einen Temperatursensor (2), wobei der Temperatursensor (2) einen Sensorkopf (3) aufweist, wobei der Sensorkopf (3) ein Sensorelement (4) zur Messung einer Temperatur (T) von mindestens einer Akkumulatorzelle (114a, 114b, 114c) aufweist, und eine an den Sensorkopf (3) anschließende Anzahl von Sensorkabeln (5a, 5b) aufweist,
- mindestens einen Anordnungskörper (6),
- wobei der Anordnungskörper (6) einen Kopfanordnungsbereich (7) zur Anordnung des Sensorkopfs (3) definiert,
- wobei der Anordnungskörper (6) einen an den Kopfanordnungsbereich (7) anschließenden Kabelanordnungsbereich (8) zur Anordnung eines Kabelabschnitts (5S) der Anzahl von Sensorkabeln (5a, 5b) definiert,
- wobei der Anordnungskörper (6) mindestens ein Kopfsicherungselement (9) mit einem Kabeldurchgang (10) aufweist, wobei eine Durchgangsbreite (10B) des Kabeldurchgangs (10) größer oder gleich einer Kabelbreite (5B) des angeordneten Kabelabschnitts (5S) und kleiner als eine Kopfbreite (3B) des angeordneten Sensorkopfs (3) ist derart, dass das mindestens eine Kopfsicherungselement (9) zur formschlüssigen Sicherung des im Kopfanordnungsbereich (7) angeordneten Sensorkopfs (3) gegen Bewegung in Richtung (z) des Kabelanordnungsbereichs (8) ausgebildet ist,
- wobei der Anordnungskörper (6) mindestens ein Kabelsicherungselement (11) aufweist, wobei das mindestens eine Kabelsicherungselement (11) zur Sicherung des im Kabelanordnungsbereich (8) angeordneten Kabelabschnitts (5S) gegen Bewegung zur Sicherung des im Kopfanordnungsbereich (7) angeordneten Sensorkopfs (3) gegen Bewegung aus dem Kopfanordnungsbereich (7) ausgebildet ist, und
- ein Zellhalterelement (12a), wobei das Zellhalterelement (12a) und der Anordnungskörper (6) mit dem Temperatursensor (2) zur unmittelbaren mechanischen Verbindung miteinander ausgebildet sind,
- wobei das Zellhalterelement (12a) zum, insbesondere unmittelbaren, Halten von mindestens einer Akkumulatorzelle (114a, 114b, 114c) an mindestens einer Zellseite ausgebildet ist,
- wobei der Kopfanordnungsbereich (7), der Kabelanordnungsbereich (8) und der Kabeldurchgang (10) durchgehend nach außen offen sind.

2. Aufbau (1) nach Anspruch 1,
- wobei der Aufbau (1) eine Mehrzahl von Temperatursensoren (2) aufweist, wobei die Mehrzahl von Sensorkabeln (5a, 5b), insbesondere von den Kabelabschnitten (5S) verschiedene weitere Kabelabschnitte (5S') der Mehrzahl von Sensorkabeln (5a, 5b), zu mindestens einem Kabelbaum (13) gebündelt ist, insbesondere mittels mindestens eines Steckverbinders (14) und/oder wobei die weiteren Kabelabschnitte (5S') teilweise oder vollständig mindestens ein Flachbandkabel (15) bilden.

3. Aufbau (1) nach einem der vorhergehenden Ansprüche,
- wobei der Anordnungskörper (6) mindestens eine Umfangswandung (16) aufweist,
- wobei die Umfangswandung (16) sich von dem mindestens einen Kopfsicherungselement (9) entgegen der Richtung (z) zur formschlüssigen Sicherung des im Kopfanordnungsbereich (7) angeordneten Sensorkopfs (3) gegen radiale Bewegung erstreckt und ausgebildet ist, und/oder
- wobei die Umfangswandung (16) sich von dem mindestens einen Kopfsicherungselement (9) in der Richtung (z) zur formschlüssigen Sicherung des im Kabelanordnungsbereich (8) angeordneten Kabelabschnitts (5S) gegen radiale Bewegung erstreckt und ausgebildet ist, und/oder
- wobei das Zellhalterelement (12a) und der Anordnungskörper (6) mit dem Temperatursensor (2) zur Einführung des Anordnungskörpers (6) entgegen der Richtung (z) in das Zellhalterelement (12a) ausgebildet sind und wobei die Umfangswandung (16) sich von dem mindestens einen Kopfsicherungselement (9) entgegen der Richtung (z) zur Begrenzung der Einführung erstreckt und ausgebildet ist.

4. Aufbau (1) nach einem der vorhergehenden Ansprüche,
- wobei das Zellhalterelement (12a) zur formschlüssigen Sicherung des im Kopfanordnungsbereich (7) angeordneten Sensorkopfs (3) gegen Bewegung aus dem Kopfanordnungsbereich (7) bei mechanischer Verbindung des Zellhalterelements (12a) und des Anordnungskörpers (6) mit dem Temperatursensor (2) ausgebildet ist.

5. Aufbau (1) nach einem der vorhergehenden Ansprüche,
- wobei der Anordnungskörper (6) eine Kabeleinführungsöffnung (17), insbesondere an einer Umfangsseite (6WS) des Anordnungskörpers (6), zur Einführung des Kabelabschnitts (5S) in den Kabelanordnungsbereich (8) und/oder den Kabeldurchgang (10) aufweist, wobei eine Kabelöffnungsbreite (17B) der Kabeleinführungsöffnung (17) und eine Kabelanordnungstiefe (8T, 10T) des Kabelanordnungsbereichs (8) und/oder des Kabeldurchgangs (10) derart kleiner als die Kabelbreite (5B) und größer oder gleich einer Kabeldicke (5D) des Kabelabschnitts (5S) sind, dass gegenüber der Einführung der Kabelabschnitt (5S), insbesondere rechtwinklig, gedreht angeordnet ist, insbesondere zusammen mit dem Sensorkopf (3).

6. Aufbau (1) nach einem der vorhergehenden Ansprüche,
- wobei das mindestens eine Kabelsicherungselement (11) zur kraftschlüssigen Sicherung, insbesondere zur Klemmung, des Kabelabschnitts (5S) ausgebildet ist.

7. Aufbau (1) nach einem der vorhergehenden Ansprüche,
- wobei der Anordnungskörper (6) derart geformt ist und das mindestens eine Kabelsicherungselement (11) an einer Oberseite (6OS) des Anordnungskörpers (6) derart räumlich angeordnet ist, dass der im Kabelanordnungsbereich (8) angeordnete Kabelabschnitt (5S), insbesondere mindestens rechtwinklig, abgewinkelt durch den Anordnungskörper (6) geführt ist.

8. Aufbau (1) nach einem der vorhergehenden Ansprüche,
- wobei das Zellhalterelement (12a) und der Anordnungskörper (6) mit dem Temperatursensor (2) zur formschlüssigen Verbindung, insbesondere zur, insbesondere unlösbaren, Schnappverbindung, miteinander ausgebildet sind.

9. Aufbau (1) nach einem der vorhergehenden Ansprüche,
- wobei der Temperatursensor (2) einstückig ausgebildet ist, und/oder
- wobei der Anordnungskörper (6) einstückig ausgebildet ist, und/oder
- wobei das Zellhalterelement (12a) einstückig ausgebildet ist.

10. Aufbau (1) nach einem der vorhergehenden Ansprüche,
- wobei das Zellhalterelement (12a) zum Halten einer Mehrzahl von Zellgruppen (114aG1, 114aG2, 114aG3, 114aG4, 114aG5, 114bG1, 114bG2, 114bG3, 114bG4, 114bG5, 114cG1, 114cG2, 114cG3, 114cG4, 114cG5), wobei die Zellgruppen (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) jeweils eine Mehrzahl von Akkumulatorzellen (114a, 114b, 114c), insbesondere von, insbesondere länglichen, Rundzellen, aufweisen, an mindestens einer Zellseite, insbesondere einer Zellumfangsseite (ZUS), ausgebildet ist,
- wobei das Sensorelement (4) zur Messung der Temperatur (T) von zwei der Mehrzahl von Zellgruppen (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) bei mechanischer Verbindung des Zellhalterelements (12a) und des Anordnungskörpers (6) mit dem Temperatursensor (2) angeordnet ist.

11. Aufbau (1) nach einem der vorhergehenden Ansprüche,
- wobei das Zellhalterelement (12a) zur Aufnahme der Anzahl von Sensorkabeln (5a, 5b), insbesondere einem von dem Kabelabschnitt (5S) verschiedenen weiteren Kabelabschnitt (5S") der Anzahl von Sensorkabeln (5a, 5b), ausgebildet ist,
- wobei der Aufbau (1) mindestens eine Sicherungseinheit (18a), insbesondere einen weiteren Kabelbaum, insbesondere einen Mittelspannungsabgriff-Kabelbaum, aufweist,
- wobei das Zellhalterelement (12a) und die Sicherungseinheit (18a) zur mechanischen Verbindung miteinander und zur, insbesondere formschlüssigen, Sicherung der aufgenommenen Anzahl von Sensorkabeln (5a, 5b) gegen Bewegung aus dem Zellhalterelement (12a) bei mechanischer Verbindung des Zellhalterelements (12a) und der Sicherungseinheit (18a) ausgebildet sind.

12. Akkupack (111) zur Versorgung eines elektrisch angetriebenen Garten- und/oder Forstbearbeitungsgeräts (101) mit elektrischer Antriebsleistung (AL), wobei der Akkupack (111) aufweist:
- einen Aufbau (1) nach einem der vorhergehenden Ansprüche, und
- mindestens eine Akkumulatorzelle (114a, 114b, 114c), insbesondere eine, insbesondere längliche, Rundzelle.

13. Akkupack (111) nach Anspruch 12,
- wobei der Akkupack (111) einen Messelektronikteil (115) aufweist, wobei der Messelektronikteil (115) zur elektrischen Verbindung mit dem Sensorelement (4) mittels der Anzahl von Sensorkabeln (5a, 5b) zur Messung der Temperatur (T) von der mindestens einen Akkumulatorzelle (114a, 114b, 114c) ausgebildet ist.

14. Garten- und/oder Forstbearbeitungssystem (100), wobei das Garten- und/oder Forstbearbeitungssystem (100) aufweist:
- einen Akkupack (111) nach Anspruch 12 oder 13, und
- ein elektrisch angetriebenes Garten- und/oder Forstbearbeitungsgerät (101),
- wobei der Akkupack (111) und das elektrisch angetriebene Garten- und/oder Forstbearbeitungsgerät (101) zur elektrischen Verbindung miteinander zur Versorgung des elektrisch angetriebenen Garten- und/oder Forstbearbeitungsgeräts (101) mit elektrischer Antriebsleistung (AL) von dem Akkupack (111) ausgebildet sind.

## Claims

1. Construction (1) for a battery pack (111) for supplying an electrically powered garden and/or forest tending apparatus (101) with an electric power output (AL), wherein the construction (1) has:
- at least one temperature sensor (2), wherein the temperature sensor (2) has a sensor head (3), wherein the sensor head (3) for measuring a temperature (T) of at least one battery cell (114a, 114b, 114c) has a sensor element (4), and a number of sensor cables (5a, 5b) contiguous to the sensor head (3);
- at least one assembly body (6),
- wherein the assembly body (6) defines a head disposal region (7) for disposing the sensor head (3);
- wherein the assembly body (6) for disposing a cable portion (5S) of the number of sensor cables (5a, 5b) defines a cable disposal region (8) contiguous to the head disposal region (7);
- wherein the assembly body (6) has at least one head securing element (9) having a cable conduit (10), wherein a conduit width (10B) of the cable conduit (10) is larger than or equal to a cable width (5B) of the disposed cable portion (5S) and smaller than a head width (3B) of the disposed sensor head (3) in such a manner that the at least one head securing element (9) is configured for securing in a form-fitting manner the sensor head (3) disposed in the head disposal region (7) in relation to a movement in the direction (z) of the cable disposal region (8) ;
- wherein the assembly body (6) has at least one cable securing element (11), wherein the at least one cable securing element (11) for securing the cable portion (5S) disposed in the cable disposal region (8) in relation to a movement is configured for securing the sensor head (3) disposed in the head disposal region (7) in relation to a movement out of the head disposal region (7); and
- a cell holder element (12a), wherein the cell holder element (12a) and the assembly body (6) together with the temperature sensor (2) are configured for directly mechanically connecting to one another,
- wherein the cell holder element (12a) is configured for holding, in particular directly, at least one battery cell (114a, 114b, 114c) on at least one cell side,
- wherein the head disposal region (7), the cable disposal region (8) and the cable conduit (10) are continuously open toward the outside.

2. Construction (1) according to Claim 1,
- wherein the construction (1) has a plurality of temperature sensors (2), wherein the plurality of sensor cables (5a, 5b), in particular further cable portions (5S') of the plurality of sensor cables (5a, 5b) that are different from the cable portions (5S), are bundled, in particular by means of at least one plug connector (14) so as to form at least one cable harness (13), and/or wherein the further cable portions (5S') in part or in full form at least one ribbon cable (15).

3. Construction (1) according to one of the preceding claims,
- wherein the assembly body (6) has at least one circumferential wall (16);
- wherein the circumferential wall (16) extends and is configured from the at least one head securing element (9) counter to the direction (z) for securing in a form-fitting manner the sensor head (3) disposed in the head disposal region (7) in relation to a radial movement; and/or
- wherein the circumferential wall (16) extends and is configured from the at least one head securing element (9) in the direction (z) for securing in a form-fitting manner the cable portion (5S) disposed in the cable disposal region (8) in relation to a radial movement; and/or
- wherein the cell holder element (12a) and the assembly body (6) together with the temperature sensor (2) are configured for introducing the assembly body (6) into the cell holder element (12a) counter to the direction (z), and wherein the circumferential wall (16) extends and is configured from the at least one head securing element (9) counter to the direction (z) for delimiting the introduction.

4. Construction (1) according to one of the preceding claims,
- wherein the cell holder element (12a) when mechanically connecting the cell holder element (12a) and the assembly body (6) to the temperature sensor (2) is configured for securing in a form-fitting manner the sensor head (3) disposed in the head disposal region (7) in relation to a movement out of the head disposal region (7).

5. Construction (1) according to one of the preceding claims,
- wherein the assembly body (6) for introducing the cable portion (5S) into the cable disposal region (8) and/or the cable conduit (10), in particular on a circumferential side (6WS) of the assembly body (6), has a cable introduction opening (17), wherein a cable opening width (17B) of the cable introduction opening (17) and a cable disposal depth (8T, 10T) of the cable disposal region (8) and/or of the cable conduit (10) are smaller than the cable width (5B) and larger than or equal to a cable thickness (5D) of the cable portion (5S) in such a manner that the cable portion (5S), in particular conjointly with the sensor head (3), is disposed so as to be rotated, in particular orthogonal, in relation to the introduction.

6. Construction (1) according to one of the preceding claims,
- wherein the at least one cable securing element (11) is configured for securing in a force-fitting manner, in particular for clamping, the cable portion (5S).

7. Construction (1) according to one of the preceding claims,
- wherein the assembly body (6) is shaped in such a manner, and the at least one cable securing element (11) is disposed on an upper side (60S) of the assembly body (6) in such a spatial manner, that the cable portion (5S) disposed in the cable disposal region (8) is routed through the assembly body (6) in an angular, in particular at least orthogonal, manner.

8. Construction (1) according to one of the preceding claims,
- wherein the cell holder element (12a) and the assembly body (6) together with the temperature sensor (2) are configured for connecting to one another in a form-fitting manner, in particular for snap-fitting, in particular in a non-releasable snap-fitting manner.

9. Construction (1) according to one of the preceding claims,
- wherein the temperature sensor (2) is configured so as to be integral; and/or
- wherein the assembly body (6) is configured so as to be integral; and/or
- wherein the cell holder element (12a) is configured so as to be integral.

10. Construction (1) according to one of the preceding claims,
- wherein the cell holder element (12a) is configured for holding a plurality of cell groups (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) on at least one cell side, in particular a cell circumferential side (ZUS), wherein the cell groups (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) have in each case a plurality of in particular elongate, in particular round cell, battery cells (114a, 114b, 114c);
- wherein the sensor element (4) when mechanically connecting the cell holder element (12a) and the assembly body (6) to the temperature sensor (2) is disposed for measuring the temperature (T) of two of the plurality of cell groups (114aG1, 114aG2, 114aG3, 114aG4, 114aG5, 114bG1, 114bG2, 114bG3, 114bG4, 114bG5, 114cG1, 114cG2, 114cG3, 114cG4, 114cG5).

11. Construction (1) according to one of the preceding claims,
- wherein the cell holder element (12a) is configured for receiving the number of sensor cables (5a, 5b), in particular a further cable portion (5S'') of the number of sensor cables (5a, 5b) that is different from the cable portion (5S);
- wherein the construction (1) has at least one securing unit (18a), in particular a further cable harness, in particular a medium-voltage pickup cable harness;
- wherein the cell holder element (12a) and the securing unit (18a) are configured for mechanically connecting to one another, and when mechanically connecting the cell holder element (12a) and the securing unit (18a) for securing in particular in a form-fitting manner the received number of sensor cables (5a, 5b) in relation to a movement out of the cell holder element (12a).

12. Battery pack (111) for supplying an electrically powered garden and/or forest tending apparatus (101) with an electric power output (AL), wherein the battery pack (111) has:
- a construction (1) according to one of the preceding claims; and
- at least one battery cell (114a, 114b, 114c), particularly an in particular elongate round cell.

13. Battery pack (111) according to Claim 12,
- wherein the battery pack (111) has a measurement electronics part (115), wherein the measurement electronics part (115) by means of the number of sensor cables (5a, 5b) for measuring the temperature (T) of the at least one battery cell (114a, 114b, 114c) is configured for electrically connecting to the sensor element (4).

14. Garden and/or forest tending system (100), wherein the garden and/or forest tending system (100) has:
- a battery pack (111) according to Claim 12 or 13; and
- an electrically powered garden and/or forest tending apparatus (101);
- wherein the battery pack (111) and the electrically powered garden and/or forest tending apparatus (101) for supplying the electrically powered garden and/or forest tending apparatus (101) with an electric power output (AL) from the battery pack (111) are configured for electrically connecting to one another.

## Revendications

1. Structure (1) pour un bloc-batterie (111) destiné à alimenter en puissance d'entraînement électrique (AL) un outil de jardinage et/ou de sylviculture (101) à entraînement électrique, la structure (1) présentant :
- au moins un capteur de température (2), le capteur de température (2) présentant une tête de capteur (3), la tête de capteur (3) présentant un élément de capteur (4) pour mesurer une température (T) d'au moins une cellule d'accumulateur (114a, 114b, 114c), et un nombre de câbles de capteur (5a, 5b) se raccordant à la tête de capteur (3),
- au moins un corps d'agencement (6),
- le corps d'agencement (6) définissant une zone d'agencement de tête (7) pour agencer la tête de capteur (3),
- le corps d'agencement (6) définissant une zone d'agencement de câble (8) adjacente à la zone d'agencement de tête (7) pour agencer une section de câble (5S) du nombre de câbles de capteur (5a, 5b),
- le corps d'agencement (6) présentant au moins un élément de sécurisation de tête (9) avec un passage de câble (10), une largeur de passage (10B) du passage de câble (10) étant supérieure ou égale à une largeur de câble (5B) de la section de câble (5S) agencée et inférieure à une largeur de tête (3B) de la tête de capteur (3) agencée de telle sorte que l'au moins un élément de sécurisation de tête (9) est réalisé pour sécuriser par complémentarité de forme la tête de capteur (3) agencée dans la zone d'agencement de tête (7) contre un mouvement dans la direction (z) de la zone d'agencement de câble (8),
- le corps d'agencement (6) présentant au moins un élément de sécurisation de câble (11), l'au moins un élément de sécurisation de câble (11) étant réalisé pour sécuriser la section de câble (5S) agencée dans la zone d'agencement de câble (8) contre un mouvement pour sécuriser la tête de capteur (3) agencée dans la zone d'agencement de tête (7) contre un mouvement hors de la zone d'agencement de tête (7), et
- un élément de support de cellule (12a), l'élément de support de cellule (12a) et le corps d'agencement (6) avec le capteur de température (2) étant réalisés pour une liaison mécanique directe l'un avec l'autre,
- l'élément de support de cellule (12a) étant réalisé pour supporter, notamment directement, au moins une cellule d'accumulateur (114a, 114b, 114c) sur au moins un côté de cellule,
- la zone d'agencement de tête (7), la zone d'agencement de câble (8) et le passage de câble (10) étant ouverts de manière continue vers l'extérieur.

2. Structure (1) selon la revendication 1,
- la structure (1) présentant une pluralité de capteurs de température (2), la pluralité de câbles de capteur (5a, 5b), notamment d'autres sections de câble (5S') différentes des sections de câble (5S) de la pluralité de câbles de capteur (5a, 5b), étant regroupés en au moins un faisceau de câbles (13), notamment au moyen d'au moins un connecteur enfichable (14) et/ou les autres sections de câble (5S') formant partiellement ou entièrement au moins un câble plat (15).

3. Structure (1) selon l'une quelconque des revendications précédentes,
- le corps d'agencement (6) présentant au moins une paroi périphérique (16),
- la paroi périphérique (16) s'étendant et étant réalisée à partir de l'au moins un élément de sécurisation de tête (9) à l'encontre de la direction (z) pour sécuriser par complémentarité de forme la tête de capteur (3) agencée dans la zone d'agencement de tête (7) contre un mouvement radial, et/ou
- la paroi périphérique (16) s'étendant et étant réalisée à partir de l'au moins un élément de sécurisation de tête (9) dans la direction (z) pour sécuriser par complémentarité de forme la section de câble (5S) agencée dans la zone d'agencement de câble (8) contre un mouvement radial, et/ou
- l'élément de support de cellule (12a) et le corps d'agencement (6) avec le capteur de température (2) étant réalisés pour insérer le corps d'agencement (6) dans l'élément de support de cellule (12a) à l'encontre de la direction (z), et la paroi périphérique (16) s'étendant et étant réalisée à partir de l'au moins un élément de sécurisation de tête (9) à l'encontre de la direction (z) pour limiter l'insertion.

4. Structure (1) selon l'une quelconque des revendications précédentes,
- l'élément de support de cellule (12a) étant réalisé pour sécuriser par complémentarité de forme la tête de capteur (3) agencée dans la zone d'agencement de tête (7) contre un mouvement hors de la zone d'agencement de tête (7) lors d'une liaison mécanique de l'élément de support de cellule (12a) et du corps d'agencement (6) avec le capteur de température (2).

5. Structure (1) selon l'une quelconque des revendications précédentes,
- le corps d'agencement (6) présentant une ouverture d'insertion de câble (17), notamment sur un côté périphérique (6WS) du corps d'agencement (6), pour l'insertion de la section de câble (5S) dans la zone d'agencement de câble (8) et/ou le passage de câble (10), une largeur d'ouverture de câble (17B) de l'ouverture d'insertion de câble (17) et une profondeur d'agencement de câble (8T, 10T) de la zone d'agencement de câble (8) et/ou du passage de câble (10) étant inférieures à la largeur de câble (5B) et supérieures ou égales à une épaisseur de câble (5D) de la section de câble (5S) de telle sorte que, par rapport à l'insertion, la section de câble (5S) est agencée de manière à être tournée, notamment à angle droit, notamment conjointement avec la tête de capteur (3).

6. Structure (1) selon l'une quelconque des revendications précédentes,
- l'au moins un élément de sécurisation de câble (11) étant réalisé pour sécuriser par adhérence, notamment pour serrer, la section de câble (5S).

7. Structure (1) selon l'une quelconque des revendications précédentes,
- le corps d'agencement (6) étant formé de telle sorte et l'au moins un élément de sécurisation de câble (11) étant agencé dans l'espace sur un côté supérieur (60S) du corps d'agencement (6) de telle sorte que la section de câble (5S) agencée dans la zone d'agencement de câble (8) est guidée à travers le corps d'agencement (6) de manière angulaire, notamment au moins à angle droit.

8. Structure (1) selon l'une quelconque des revendications précédentes,
- l'élément de support de cellule (12a) et le corps d'agencement (6) avec le capteur de température (2) étant réalisés pour une liaison par complémentarité de forme, notamment pour une liaison par encliquetage, notamment indémontable, entre eux.

9. Structure (1) selon l'une quelconque des revendications précédentes,
- le capteur de température (2) étant réalisé d'une seule pièce, et/ou
- le corps d'agencement (6) étant réalisé d'une seule pièce, et/ou
- l'élément de support de cellule (12a) étant réalisé d'une seule pièce.

10. Structure (1) selon l'une quelconque des revendications précédentes,
- l'élément de support de cellule (12a) étant réalisé pour supporter une pluralité de groupes de cellules (114aG1, 114aG2, 114aG3, 114aG4, 114aG5, 114bG1, 114bG2, 114bG3, 114bG4, 114bG5, 114cG1, 114cG2, 114cG3, 114cG4, 114cG5), les groupes de cellules (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) présentant chacun une pluralité de cellules d'accumulateur (114a, 114b, 114c), notamment de cellules rondes, notamment allongées, sur au moins un côté de cellule, notamment un côté périphérique de cellule (ZUS),
- l'élément de capteur (4) étant agencé pour mesurer la température (T) de deux de la pluralité de groupes de cellules (114aG1, 114aG2, 114aG3, 114aG4, 114aG5, 114bG1, 114bG2, 114bG3, 114bG4, 114bG5, 114cG1, 114cG2, 114cG3, 114cG4, 114cG5) lors de la liaison mécanique de l'élément de support de cellule (12a) et du corps d'agencement (6) avec le capteur de température (2).

11. Structure (1) selon l'une quelconque des revendications précédentes,
- l'élément de support de cellule (12a) étant réalisé pour recevoir le nombre de câbles de capteur (5a, 5b), notamment une autre section de câble (5S'') différente de la section de câble (5S) du nombre de câbles de capteur (5a, 5b),
- la structure (1) présentant au moins une unité de sécurisation (18a), notamment un autre faisceau de câbles, notamment un faisceau de câbles de prise de moyenne tension,
- l'élément de support de cellule (12a) et l'unité de sécurisation (18a) étant réalisés pour être reliés mécaniquement l'un à l'autre et pour sécuriser, notamment par complémentarité de forme, le nombre de câbles de capteur (5a, 5b) reçus contre un mouvement hors de l'élément de support de cellule (12a) lors d'une liaison mécanique de l'élément de support de cellule (12a) et de l'unité de sécurisation (18a).

12. Bloc-batterie (111) pour l'alimentation en puissance d'entraînement électrique (AL) d'un outil de jardinage et/ou de sylviculture (101) à entraînement électrique, le bloc-batterie (111) présentant :
- une structure (1) selon l'une quelconque des revendications précédentes, et
- au moins une cellule d'accumulateur (114a, 114b, 114c), notamment une cellule ronde, notamment allongée.

13. Bloc-batterie (111) selon la revendication 12,
- le bloc-batterie (111) présentant une partie électronique de mesure (115), la partie électronique de mesure (115) étant réalisée pour être reliée électriquement à l'élément de capteur (4) au moyen du nombre de câbles de capteur (5a, 5b) pour mesurer la température (T) de l'au moins une cellule d'accumulateur (114a, 114b, 114c).

14. Système de jardinage et/ou de sylviculture (100), le système de jardinage et/ou de sylviculture (100) présentant :
- un bloc-batterie (111) selon la revendication 12 ou 13, et
- un outil de jardinage et/ou de sylviculture à entraînement électrique (101),
- le bloc-batterie (111) et l'outil de jardinage et/ou de sylviculture à entraînement électrique (101) étant réalisés pour être reliés électriquement l'un à l'autre afin d'alimenter en puissance d'entraînement électrique (AL) l'outil de jardinage et/ou de sylviculture à entraînement électrique (101) à partir du bloc-batterie (111) .
